(19) Europäisches Patentamt
European Patent Office
Office européen des brevets

(11) **EP 4 572 376 A1**

(12) **EUROPEAN PATENT APPLICATION**
published in accordance with Art. 153(4) EPC

(43) Date of publication:
**18.06.2025 Bulletin 2025/25**

(21) Application number: **23852012.6**

(22) Date of filing: **11.08.2023**

(51) International Patent Classification (IPC):
*H04W 24/08* (2009.01)

(52) Cooperative Patent Classification (CPC):
**H04B 7/06; H04W 24/08; H04W 24/10**

(86) International application number:
**PCT/CN2023/112715**

(87) International publication number:
**WO 2024/032792 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.08.2022 CN 202210968182**

(71) Applicant: **Beijing Unisoc Communications Technology Co., Ltd**
**Beijing 100083 (CN)**

(72) Inventor: **WANG, Hualei**
**Beijing 100083 (CN)**

(74) Representative: **Mewburn Ellis LLP**
**Aurora Building**
**Counterslip**
**Bristol BS1 6BX (GB)**

(54) **CHANNEL STATE INFORMATION REPORT TRANSMISSION METHODS AND APPARATUSES, TERMINAL DEVICE AND NETWORK DEVICE**

(57) This disclosure discloses a method and apparatus for channel state information (CSI) report transmission, a terminal device, and a network device, and relates to the field of communication technology. The method includes the following. A terminal device transmits a first CSI report. The first CSI report contains a first measurement result and/or a second measurement result. The first measurement result is a measurement result obtained by performing measurement based on a tracking reference signal (TRS) resource. The second measurement result is a measurement result obtained by performing measurement based on one or more channel state information reference signal (CSI-RS) transmission occasions. As such, CSI reporting can be enhanced by containing the first measurement result and/or the second measurement result in the first CSI report.

TERMINAL DEVICE

NETWORK DEVICE

S310, FIRST CSI REPORT, WHERE FIRST CSI REPORT CONTAINS FIRST MEASUREMENT RESULT AND/OR SECOND MEASUREMENT RESULT, FIRST MEASUREMENT RESULT IS MEASUREMENT RESULT OBTAINED BY PERFORMING MEASUREMENT BASED ON TRS RESOURCE, AND SECOND MEASUREMENT RESULT IS MEASUREMENT RESULT OBTAINED BY PERFORMING MEASUREMENT BASED ON ONE OR MORE CSI-RS TRANSMISSION OCCASIONS

FIG. 3

EP 4 572 376 A1

**Description**

TECHNICAL FIELD

This disclosure relates to the field of communication technology, in particular to a method and apparatus for channel state information (CSI) report transmission, a terminal device, and a network device.

BACKGROUND

A channel state information (CSI) framework is standardized in a standard protocol specified by the 3rd generation partnership project (3GPP).

The CSI framework may involve CSI resource configuration, CSI report configuration, a priority of a CSI report, a CSI processing unit (CPU) occupied by the CSI report, a CSI computation time requirement of the CSI report, and the like.

However, with the increasingly complex and diverse communication requirements, the CSI report may need to contain (carry/bear, etc.) some additional information to enhance CSI reporting. The current CSI framework may not be adapted to such a CSI report (i.e., the CSI report containing the additional information). Therefore, further study is needed regarding how to enhance the CSI framework to adapt to such a CSI report.

SUMMARY

A method and apparatus for channel state information (CSI) report transmission, a terminal device, and a network device are provided in embodiments of the disclosure, so as to solve the problem of how to enhance CSI reporting, thereby guaranteeing the CSI performance.

In a first aspect, a method for CSI report transmission is provided in the disclosure. The method includes the following. A first CSI report is transmitted. The first CSI report contains a first measurement result and/or a second measurement result. The first measurement result is a measurement result obtained by performing measurement based on a tracking reference signal (TRS) resource. The second measurement result is a measurement result obtained by performing measurement based on one or more channel state information reference signal (CSI-RS) transmission occasions.

As can be seen, in order to enhance CSI reporting/feedback, in the disclosure, a CSI report needs to contain the measurement result (i.e., the first measurement result) obtained by performing measurement based on the TRS resource and/or the measurement result (i.e., the second measurement result) obtained by performing measurement based on the one or more CSI-RS transmission occasions. The CSI report containing the first measurement result and/or the second measurement result may be referred to as the first CSI report.

Currently, the measurement result obtained by performing measurement based on the TRS resource is intended for only a terminal device. In contrast, in the disclosure, the first measurement result is contained in the first CSI report for reporting/feedback, so that the measurement result based on the TRS resource can be reported/fed back to a network device, and thus CSI reporting/feedback can be enhanced, and the accuracy of evaluating the downlink channel quality can be improved, thereby improving the transmission performance and satisfying complex and diverse transmission requirements.

Since the second measurement result includes more/new CSI information, which is then contained in the first CSI report for reporting/feedback, CSI reporting/feedback can be enhanced. In addition, since the more/new CSI information is conducive to improving the accuracy of evaluating the downlink channel quality, the transmission performance can be improved, and complex and diverse transmission requirements can be satisfied.

In a second aspect, a method for CSI report transmission is provided in the disclosure. The method includes the following. A first CSI report is received. The first CSI report contains a first measurement result and/or a second measurement result. The first measurement result is a measurement result obtained by performing measurement based on a TRS resource. The second measurement result is a measurement result obtained by performing measurement based on one or more CSI-RS transmission occasions.

In a third aspect, an apparatus for CSI report transmission is provided in the disclosure. The apparatus includes a transmitting unit. The transmitting unit is configured to transmit a first CSI report. The first CSI report contains a first measurement result and/or a second measurement result. The first measurement result is a measurement result obtained by performing measurement based on a TRS resource. The second measurement result is a measurement result obtained by performing measurement based on one or more CSI-RS transmission occasions.

In a fourth aspect, an apparatus for CSI report transmission is provided in the disclosure. The apparatus includes a receiving unit. The receiving unit is configured to receive a first CSI report. The first CSI report contains a first measurement result and/or a second measurement result. The first measurement result is a measurement result obtained by performing measurement based on a TRS resource. The second measurement result is a measurement result obtained by performing measurement based on one or more CSI-RS transmission occasions.

In a fifth aspect, operations in the method in the first aspect are applied to or in a terminal device.

In a sixth aspect, operations in the method in the second aspect are applied to or in a network device.

In a seventh aspect, a terminal device is provided in the disclosure. The terminal device includes a processor, a memory, and a computer program or instruction stored in the memory. The processor is configured to execute the computer program or instruction to implement the operations of the method in the first aspect.

In an eighth aspect, a network device is provided in the disclosure. The network device includes a processor, a memory, and a computer program or instruction stored in the memory. The processor is configured to execute the computer program or instruction to implement the operations of the method in the second aspect.

In a ninth aspect, a chip is provided in the disclosure. The chip includes a processor and a communication interface. The processor is configured to implement the operations of the method in the first aspect or the second aspect.

In a tenth aspect, a chip module is provided in the disclosure. The chip module includes a transceiver assembly and a chip. The chip includes a processor. The processor is configured to implement the operations of the method in the first aspect or the second aspect.

In an eleventh aspect, a computer-readable storage medium is provided in the disclosure. The computer-readable storage medium is configured to store a computer program or instruction which, when executed, is operable to implement the operations of the method in the first aspect or the second aspect. For example, the computer program or instruction is executed by a processor.

In a twelfth aspect, a computer program product is provided in the disclosure. The computer program product includes a computer program or instruction which, when executed, is operable to implement the operations of the method in the first aspect or the second aspect. For example, the computer program or instruction is executed by a processor.

In a thirteenth aspect, a communication system is provided in the disclosure. The communication system includes the terminal device in the seventh aspect and the network device in the eighth aspect.

For the beneficial effects of the technical solutions in the second to thirteenth aspects, reference can be made to the technical effects of the technical solution in the first aspect, which will not be repeated herein.

BRIEF DESCRIPTION OF THE DRAWINGS

In order to more clearly illustrate the technical solutions in embodiments of the disclosure, the following briefly introduces drawings required in descriptions of embodiments or the prior art.

FIG. 1 is a schematic architectural diagram of a communication system according to embodiments of the disclosure.
FIG. 2 is a schematic structural diagram of a channel state information (CSI) measurement window and a CSI reporting window according to embodiments of the disclosure.
FIG. 3 is a schematic flowchart of a method for CSI report transmission according to embodiments of the disclosure.
FIG. 4 is a block diagram illustrating functional units of an apparatus for CSI report transmission according to embodiments of the disclosure.
FIG. 5 is a block diagram illustrating functional units of an apparatus for CSI report transmission according to embodiments of the disclosure.
FIG. 6 is a schematic structural diagram of a terminal device according to embodiments of the disclosure.
FIG. 7 is a schematic structural diagram of a network device according to embodiments of the disclosure.

DETAILED DESCRIPTION

It may be understood that, the terms "first", "second", and the like used in embodiments of the disclosure are used to distinguish different objects rather than describe a particular order. In addition, the terms "include", "comprise", and "have" as well as variations thereof are intended to cover non-exclusive inclusion. For example, a process, method, software, product, or device including a series of steps or units is not limited to the listed steps or units, and instead, it can optionally include other steps or units that are not listed or other steps or units inherent to the process, method, product, or device.

The term "embodiment" referred to in embodiments of the disclosure means that a particular feature, structure, or characteristic described in conjunction with the embodiment may be contained in at least one embodiment of the disclosure. The phrase appearing in various places in the specification does not necessarily refer to the same embodiment, nor does it refer to an independent or alternative embodiment that is mutually exclusive with other embodiments. It is explicitly and implicitly understood by those skilled in the art that an embodiment described herein may be combined with other embodiments.

The term "and/or" in embodiments of the disclosure describes an association relationship between associated objects, and indicates that there may be three relationships, for example, $A$ and/or $B$ may mean $A$ alone, both $A$ and $B$ exist, and *B* alone. *A* and *B* each may be a singular from or a plural form.

The character "/" in embodiments of the disclosure can indicate that the associated objects are in an "or" relationship. In addition, the symbol "/" may represent a divisor, i.e., perform a division operation. For example, *A/B* may represent *A* divided by *B*.

The term "at least one (item) of" or the like in embodiments of the disclosure refers to any combination of these items, including any combination of a single item or multiple items, and refers to one or multiple, where multiple refers to two or more. For example, at least one (item) of *a, b,* or *c* can represent the following seven cases: *a*; *b*; *c*; *a* and *b;* *a* and *c*; *b* and *c*; *a, b,* and *c. a, b,* and *c* each may be an element or a set including one or more elements.

The term "equal to" in embodiments of the disclosure may be used together with "greater than", which is applicable to a technical solution used in a case of "greater than"; or may be used together with "less than", which is applicable to a technical solution used in a case of "less than". It may be noted that, when "equal to" is used together with "greater than", "equal to" is not used together with "less than"; and when "equal to" is used together with "less than", "equal to" is not used together with "greater than".

The terms "of", "corresponding/relevant", and "indicated" in embodiments of the disclosure may be used interchangeably sometimes. It may be noted that meanings expressed by the terms are consistent when differences of the terms are not emphasized.

The term "connection" in embodiments of the disclosure refers to various connection methods, such as direct connection or indirect connection, so as to implement communication between devices, which is not limited herein.

The terms "network" and "system" in embodiments of the disclosure may refer to the same concept, and a communication system is a communication network.

The terms "size", "length", and the like in embodiments of the disclosure may refer to the same concept.

The terms "network" and "system" in embodiments of the disclosure may refer to the same concept, and a communication system is a communication network.

The terms "number", "quantity", and "amount" in embodiments of the disclosure may refer to the same concept.

The terms "reporting", "report", "feedback", and the like in embodiments of the disclosure may refer to the same concept. In other words, terms "CSI report", "CSI reporting", "CSI feedback", and the like may refer to the same concept.

The terms "contain", "carry", and "bear" in embodiments of the disclosure may refer to the same concept.

The terms "associated with", "corresponding to", "mapped to", and the like in embodiments of the disclosure may refer to the same concept.

The following describes related contents, concepts, meanings, technical problems, technical solutions, beneficial effects, and the like involved in embodiments of the disclosure.

I. Communication system, terminal device, and network device

1. Communication system

The technical solutions of embodiments of the disclosure may be applicable to various communication systems, for example, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication System (UMTS), a wireless local area network (WLAN), a wireless fidelity (Wi-Fi), a 6th-generation (6G) communication system, or other communication systems.

It may be noted that, a conventional communication system generally supports a limited number (quantity) of connections and therefore is easy to implement. However, with the development of communication technology, a communication system will not only support a conventional communication system but also support, for example, device-to-device (D2D) communication, machine-to-machine (M2M) communication, machine-type communication (MTC), vehicle-to-vehicle (V2V) communication, vehicle to everything (V2X) communication, narrowband internet of things (NB-IoT) communication, etc. Therefore, the technical solutions of embodiments of the disclosure can also be applied to these communication systems.

In addition, the technical solutions of embodiments of the disclosure may be applied to a beamforming scenario, a carrier aggregation (CA) scenario, a dual connectivity (DC) scenario, or a standalone (SA) deployment scenario, etc.

In embodiments of the disclosure, a spectrum used for communication between a terminal device and a network device or a spectrum used for communication between a terminal device and a terminal device may be a licensed spectrum or an unlicensed spectrum, which is not limited herein. In addition, the unlicensed spectrum may be understood as a shared spectrum, and the licensed spectrum may be understood as an unshared spectrum.

Since various embodiments of the disclosure are described in connection with a terminal device and a network device, the terminal device and the network device involved will be described in detail below.

2. Terminal device

The terminal device may be a device with transmitting and/or receiving functions, or may be referred to as a terminal, a user equipment (UE), a remote UE, a relay UE, an access terminal device, a subscriber unit, a subscriber station, a mobile station, a remote station, a mobile device, a user terminal device, a smart terminal device, a wireless communication device, a user agent, or a user apparatus. It may be noted that, a relay device is a terminal device capable of providing a relay forwarding service for other terminal devices (including a remote terminal device).

For example, the terminal device may be a mobile phone, a pad, a computer with wireless transceiver functions, a virtual reality (VR) terminal device, an augmented reality (AR) terminal device, a wireless terminal device in industrial control, a wireless terminal device in self-driving, a wireless terminal device in remote medicine, a wireless terminal device in smart grid, a wireless terminal device in transportation safety, a wireless terminal device in smart city, or a wireless terminal device in smart home, etc.

For another example, the terminal device may also be a cellular radio telephone, a cordless telephone, a session initiation protocol (SIP) telephone, a wireless local loop (WLL) station, a personal digital assistant (PDA), various devices having wireless communication functions such as a handheld device, a computing device or other processing devices coupled with a wireless modem, an in-vehicle device, a wearable device, a terminal device in a next-generation communication system (such as an NR communication system, a 6G communication system), or a terminal device in a future evolved public land mobile network (PLMN), etc., which is not limited herein.

In some possible implementations, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In some possible implementations, the terminal device may include a device with wireless communication functions, such as a system-on-chip (SOC), a chip, a chip module, etc. Exemplarily, the SOC may include a chip, or may also include other discrete components.

3. Network device

The network device may be a device with transmitting and/or receiving functions for communicating with the terminal device.

In some possible implementations, the network device may be responsible for radio resource management (RRM), quality of service (QoS) management, data compression and encryption, and data transmission and reception at an air-interface side.

In some possible implementations, the network device may be a base station (BS) in a communication system or a device deployed on a radio access network (RAN) for providing wireless communication functions.

For example, the network device may be an evolutional node B (eNB or eNodeB) in an LTE communication system, a next-generation evolved node B (ng-eNB) in an NR communication system, a next-generation node B (gNB) in an NR communication system, a master node (MN) in a DC architecture, a secondary node (SN) in a DC architecture, etc, which is not limited herein.

In some possible implementations, the network device may also be a device in a core network (CN), such as an access and mobility management function (AMF), a user plane function (UPF), etc., or may be an access point (AP) in a WLAN, a relay station, a communication device in a future evolved PLMN, a communication device in an NTN network, etc.

In some possible implementations, the network device may include an apparatus for providing wireless communication functions for the terminal device, such as an SOC, a chip, a chip module, etc. Exemplarily, the SOC may include a chip, or may include other discrete components.

In some possible implementations, the network device may communicate with an internet protocol (IP) network, for example, the Internet, a private IP network, or other data networks.

In some possible implementations, the network device may be an independent node so as to implement functions of the base station, or the network device may include two or more independent nodes to implement functions of the base station. For example, the network device includes a centralized unit (CU) and a distributed unit (DU), such as a gNB-CU and a gNB-DU. Further, in some other embodiments of the disclosure, the network device may further include an active antenna unit (AAU). The CU can implement some functions of the network device, and the DU can implement some other functions of the network device. For example, the CU is responsible for processing non-real-time protocols and services, and implements functions of a radio resource control (RRC) layer, functions of a service data adaptation protocol (SDAP) layer, and functions of a packet data convergence protocol (PDCP) layer. The DU is responsible for processing physical (PHY) layer protocols and real-time services, and implements functions of a radio link control (RLC) layer, functions of a media access control (MAC) layer, and functions of a PHY layer. In addition, the AAU can implement some PHY layer processing functions, radio frequency (RF) processing functions, and active-antenna-related functions. Since RRC layer information will eventually become PHY layer information, or be transformed from PHY layer information, in such network deployment, it may be considered that higher-layer signaling, such as RRC signaling, is transmitted by the DU, or transmitted by the DU and the AAU. It can be considered that, the network device may include at least one of the CU, the DU, or the AAU. In addition, the CU may be categorized into a network device in a RAN, or may be categorized into a network device in a CN, which is not limited herein.

In some possible implementations, the network device may be any one of multiple stations that perform coherent joint transmission (CJT) with the terminal device, another station other than the multiple stations, or another network device that performs network communication with the terminal device, which is not limited herein. Multi-station coherent joint transmission may be joint coherent transmission of multiple stations, transmission of different data belonging to the same physical downlink shared channel (PDSCH) from different stations to the terminal device, or transmission by multiple stations virtualized into one station. Names with the same meaning specified in other standards are also applicable to the disclosure. That is, the names of these parameters are not limited in the disclosure. The station in multi-station coherent joint transmission may be a remote radio head (RRH), a transmission and reception point (TRP), a network device, etc., which is not limited herein.

In some possible implementations, the network device may be any one of multiple stations that perform incoherent joint transmission with the terminal device, another station other than the multiple stations, or another network device that performs network communication with the terminal device, which is not limited herein. Multi-station incoherent joint transmission may be joint incoherent transmission of multiple stations, transmission of different data belonging to the same PDSCH from different stations to the terminal device, or transmission of different data belonging to the same PDSCH from different stations to the terminal device. Names with the same meaning specified in other standards are also applicable to the disclosure. That is, the names of these parameters are not limited in the disclosure. The station in multi-station incoherent joint transmission may be a RRH, a TRP, a network device, etc., which is not limited herein.

In some possible implementations, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In some possible implementations, the network device may provide services for a cell. The terminal device in the cell can communicate with the network device through transmission resources, such as spectrum resources. The cell may be a macro cell, a small cell, a metro cell, a micro cell, a pico cell, a femto cell, etc.

4. Exemplary description

The communication system in embodiments of the disclosure is exemplified below.

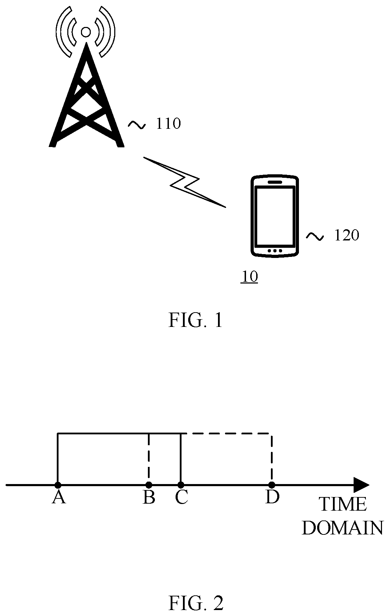

Exemplarily, referring to FIG. 1, a network architecture of a communication system in embodiments of the disclosure is illustrated. As illustrated in FIG. 1, a communication system 10 may include a network device 110 and a terminal device 120. The network device 110 and the terminal device 120 may communicate with each other wirelessly.

FIG. 1 only illustrates an example of the network architecture of the communication system, and does not constitute a limitation on the network architecture of the communication system in embodiments of the disclosure. For example, in embodiments of the disclosure, the communication system may further include a server or other devices. For another example, in embodiments of the disclosure, the communication system may include multiple network devices and/or multiple terminal devices.

II. Channel matrix

1. Channel model

In a multiple input multiple output (MIMO) system, a transmitter has $a$ antennas, a receiver has $b$ antennas, and a channel model of an MIMO channel may be expressed as: $r = Hs + n_0$. Herein, $r$ is a received signal vector of a signal passing through the MIMO channel, s is a transmitted signal vector for a transmitting terminal, $H$ is a $b \times a$ channel matrix of the MIMO channel, and $n_0$ is an additive noise vector.

In a precoding manner, the transmitter can optimize a spatial characteristic of the transmitted signal vector s through precoding according to the channel matrix $H$, so that a spatial distribution characteristic of the transmitted signal vector s can match the channel matrix $H$, and thus the degree of dependence on a receiver algorithm can be effectively reduced and the receiver algorithm can be simplified. Through precoding, the system performance can be effectively improved.

Precoding can be performed in a linear manner or a nonlinear manner. Due to complexity and other causes, generally, only linear precoding is considered in the current wireless communication system. After precoding, the channel model of the MIMO channel may be expressed as: $r = HWs + n_0$, where $W$ is a precoding matrix.

For multi-user multi-input multi-output (MU-MIMO), the receiver is unable to perform channel estimation on signals transmitted to other devices, and thus the case where the transmitter performs precoding can effectively suppress multi-user interference. As can be seen, the case where the transmitter knows the channel matrix and processes the channel matrix through using suitable precoding is beneficial for the system.

In addition, in the precoding manner, an equivalent channel matrix (e.g., *HW*) is determined via both the precoding matrix *W* and the channel matrix *H,* and a channel characteristic/feature is determined via the equivalent channel matrix. Furthermore, in some cases, the precoding matrix *W* may be derived from the channel matrix *H,* for example, the precoding matrix *W* may be a transformed matrix of the channel matrix *H*.

2. Singular value decomposition (SVD) of channel matrix *H*

The SVD of the channel matrix *H* may be expressed as: $H = U\Sigma V^T$, where $U=[u_1,u_2,...,u_b]$ represents a $b\times b$ orthogonal matrix or a $b\times b$ unitary matrix, i.e., satisfies $U^TU=I$, and $V=[v_1,v_2,...,v_a]$ represents an $a\times a$ orthogonal matrix or an $a\times a$ unitary matrix, i.e., satisfies $V^TV=I$. Each column vector of *V* may be referred to as a right-singular vector of the channel matrix *H*. $\Sigma$ represents an $a\times a$ diagonal matrix. Elements on a diagonal line are $p=min$(b,a) singular values, $\sigma_1$, $\sigma_2$, ..., $\sigma_P$, from the channel matrix *H*, which are arranged in a decreasing order, i.e., $\sigma_1 > \sigma_2 > \cdots > \sigma_P$.

3. Processing of channel matrix *H*

An $a\times a$ square matrix $H^TH$ may be acquired by performing matrix multiplying on the conjugate transpose $H^T$ of the channel matrix and the channel matrix *H*. By performing eigen decomposition on the square matrix $H^TH,$ both an eigen value and an eigen vector acquired satisfy: $(H^TH)v_i = \lambda_i v_i, i \in (1, a)$, where $\lambda_i$ represents an eigen value of the square matrix $H^TH$, and $v_i$ represents an eigen vector of the square matrix $H^TH$.

As can be seen from $H = U\Sigma V^T$, $(H^TH) = V\Sigma^2V^T$.

Therefore, the eigen vector of $H^TH$ also represents the column vector of *V* above. That is, *V* may consist of all eigen vectors of $H^TH,$ and the eigen vectors of the square matrix $H^TH$ may be right-singular vectors of the channel matrix *H*.

4. Acquisition of channel matrix *H*

In embodiments of the disclosure, the terminal device acquires the channel matrix *H* by performing channel measurement (evaluation/detection/estimation, etc.) according to a downlink reference signal. The downlink reference signal may include a channel state information reference signal (CSI-RS), a synchronization signal/physical broadcast channel block (SS/PBCH block, or referred to as SSB), or a physical broadcast channel demodulation reference signal (PBCH DMRS).

For example, the terminal device may acquire a channel matrix by performing downlink channel measurement on a current channel according to the CSI-RS, so that the channel matrix is acquired according to the CSI-RS.

For another example, the terminal device may acquire a channel matrix by performing downlink channel measurement on a current channel according to the SSB or the PBCH DMRS, so that the channel matrix is acquired according to the SSB or the PBCH DMRS.

III. CSI framework

The CSI framework is standardized in a standard protocol specified by the 3rd generation partnership project (3GPP). The CSI framework may involve CSI resource configuration, CSI report configuration, a priority of a CSI report, a CSI processing unit (CPU) occupied by the CSI report, a CSI computation time requirement of the CSI report, and the like. Details are hereinafter described separately.

1. Related configuration for CSI

The related configuration for CSI may be defined by a higher-layer parameter (such as CSI measurement configuration (*CSI-MeasConfig*)). *CSI-MeasConfig* may include two higher-layer parameters: CSI resource configuration (*CSI-ResourceConfig*) and CSI report configuration (*CSI-ReportConfig*).

*CSI-ResourceConfig* can be used to configure a CSI-RS resource for CSI measurement. The CSI measurement may be channel measurement and/or interference measurement on the CSI-RS resource.

*CSI-ReportConfig* can be used to configure CSI reporting, i.e., configure a CSI report.

Since *CSI-ReportConfig* indicates/contains CSI resource configuration identity (*CSI-ResourceConfigId*), *CSI-ResourceConfig* is associated with (corresponds to/is mapped to) *CSI-ReportConfig* through *CSI-ResourceConfigId*.

2. CSI-RS resource

*CSI-ResourceConfig* can be used to configure a resource set (such as *ResourceSet*), and *ResourceSet* can contain the most basic CSI-RS resource.

The CSI-RS resource can contain at least one of: a non-zero power CSI-RS (NZP-CSI-RS) resource set (*NZP-CSI-RS-ResourceSet*), a CSI interference measurement (CSI-IM) resource set (*CSI-IM-ResourceSet*), or an SSB resource set (*CSI-SSB-ResourceSet*).

*NZP-CSI-RS-ResourceSet* can be used for channel measurement and/or interference measurement. *CSI-IM-ResourceSet* can be used for interference measurement. *CSI-SSB-ResourceSet* can be used for channel measurement.

A resource type (*resourceType*) in *CSI-ResourceConfig* can be used to configure a type of the CSI-RS resource.

The type of the CSI-RS resource may include: a periodic CSI-RS resource, a semi-persistent CSI-RS resource, and an aperiodic CSI-RS resource.

In addition, the CSI-RS resource can be configured as a tracking reference signal (TRS) resource. A type of the TRS resource may include: a periodic TRS resource and an aperiodic TRS resource.

3. CSI report

The CSI report can be transmitted on a physical uplink control channel (PUCCH) or a physical uplink shared channel (PUSCH).

A report configuration type (*reportConfigType*) in *CSI-ReportConfig* can be used to configure a report type of the CSI report.

The report type of the CSI report may include: a periodic CSI report, an aperiodic CSI report, a semi-persistent CSI report on the PUCCH, and a semi-persistent CSI report on the PUSCH.

4. Combination of CSI report configuration and CSI-RS resource configuration

It may be noted that, the combination of CSI report configuration and CSI-RS resource configuration is illustrated in Table 1.

Table 1

| CSI-RS configuration | periodic CSI report | semi-persistent CSI report | aperiodic CSI report |
|---|---|---|---|
| periodic CSI-RS | non-dynamic triggering/activation | when carried on the PUCCH, activated by the terminal device upon receiving an activation command; when carried on the PUSCH, triggered by the terminal device upon receiving downlink control information (DCI) | triggered by DCI |
| semi-persistent CSI-RS | not supported | when carried on the PUCCH, activated by the terminal device upon receiving an activation command; when carried on the PUSCH, triggered by the terminal device upon receiving DCI | triggered by DCI |
| aperiodic CSI-RS | not supported | not supported | triggered by DCI |

5. Reporting manner of CSI report

The CSI report may be wideband CSI report or subband CSI report. The wideband can be defined as the size of a configured bandwidth part (BWP), and the subband can be defined as $N_{PRB}^{SB}$ consecutive physical resource blocks (PRBs). A subband size depends on the total number of PRBs in the BWP. The correspondence between the total number of PRBs in the BWP and the subband size is illustrated in Table 2.

Table 2

| BWP (PRBs) | subband size (PRBs) |
|---|---|
| 24 - 72 | 4, 8 |

(continued)

| BWP (PRBs) | subband size (PRBs) |
|---|---|
| 73 - 144 | 8, 16 |
| 145 - 275 | 16, 32 |

6. Type of information contained in CSI report

The CSI report may contain at least one of: layer 1 reference signal received power (L1-RSRP), layer 1 signal-to-noise and interference ratio (L1-SINR), CSI-related quantities (also referred to as CSI-related parameters)/CSI parameters, or the like.

Specifically, the CSI-related quantities/CSI parameters may include at least one of: CSI-RS resource indicator (CRI), SS/PBCH block resource indicator (SSBRI), rank indicator (RI), precoding matrix indicator (PMI), channel quality indicator (CQI), layer indicator (LI), or the like.

It may be noted that, the CRI (or SSBRI) can represent a CSI-RS (or SSB) resource recommended (or selected) by the terminal device, where one CSI-RS (or SSB) resource can represent one beam or antenna direction.

The RI can indicate the number of layers recommended (or selected) by the terminal device, and a codebook can be determined according to the number of layers. Each number of layers corresponds to one codebook, for example, a codebook with two layers or a codebook with one layer, where one codebook consists of one or more codewords. In addition, in MIMO technology, the number of layers can indicate the number of transmission links between the transmitter and the receiver.

The PMI can indicate an index of a codeword in a codebook recommended (or selected) by the terminal device, or quantized precoding information. One codeword corresponds to one precoding matrix. The RI and the PMI can together indicate the number of layers and a precoding matrix recommended by the terminal device.

The CQI can indicate the channel quality of a current channel fed back by the terminal device to the network device. The terminal device needs to calculate the CQI.

7. CSI report on PUSCH

In a standard protocol (e.g. NR R15/16/17) specified by the 3GPP, Type I CSI feedback, Type II CSI feedback, Enhanced Type II CSI feedback, and Further Enhanced Type II CSI feedback can be supported.

The basic principle of Type I CSI feedback is as follows. The terminal device compares an estimated channel with codebooks specified in the protocol, selects a codebook that best matches the channel, and then feeds back to the network device an index corresponding to the codebook.

The basic principle of Type II CSI feedback, Enhanced Type II CSI feedback, and Further Enhanced Type II CSI feedback is as follows. By using high-resolution CSI feedback, certain processing is performed on the estimated channel to feed back the processed information, including a quantized phase and amplitude.

For the CSI report on the PUSCH, Type I CSI feedback, Type II CSI feedback, Enhanced Type II CSI feedback, and Further Enhanced Type II CSI feedback can be supported.

For Type I CSI Feedback, Type II CSI Feedback, Enhanced Type II CSI Feedback, and Further Enhanced Type II CSI Feedback on the PUSCH, the CSI report may include two parts, i.e., Part 1 and Part 2.

Part 1 has a fixed payload size and is used to identify the number of information bits in Part 2.

In addition, in different cases, a type of information contained in Part 1 may be different from a type of information contained in Part 2. Details are as follows.

For Type I CSI feedback, Part 1 contains RI (if reported), CRI (if reported), CQI for the first codeword (if reported). Part 2 contains PMI (if reported), LI (if reported) and contains the CQI for the second codeword (if reported) when RI (if reported) is larger than 4.

For Type II CSI feedback, Part 1 contains RI (if reported), CQI, and an indication of the number of non-zero wideband amplitude coefficients per layer for the Type II CSI. The fields of Part 1 (RI, CQI, and the indication of the number of non-zero wideband amplitude coefficients for each layer) are separately encoded. Part 2 contains the PMI and LI (if reported) of the Type II CSI. Part 1 and 2 are separately encoded.

For Enhanced Type II CSI feedback, Part 1 contains RI (if reported), CQI, and an indication of the overall number of non-zero amplitude coefficients across layers for the Enhanced Type II CSI. The fields of Part 1 (RI, CQI, and the indication of the overall number of non-zero amplitude coefficients) are separately encoded. Part 2 contains the PMI of the Enhanced Type II CSI. Part 1 and 2 are separately encoded.

It may be noted that, for related contents/concepts/definitions/explanations in "7. CSI report on PUSCH", reference can be made to corresponding sections in the standard protocol (e.g., 3GPP 38.214), which is not limited herein. In addition, the related contents/concepts/definitions/explanations in "7. CSI report on PUSCH" may be modified in accordance with modification/change of the standard protocol (e.g., 3GPP 38.214). Those skilled in the art can also deduce/obtain modified contents in combination with the related contents/concepts/definitions/explanations in "7. CSI report on PUSCH". Therefore, the modified contents are also within the protection scope of claims of the disclosure, which will not be repeated herein.

8. Priority of CSI report

1) Description

A CSI report is associated with a priority value $Pri_{CSI}(y, k, c, s)$: $Pri_{CSI}(y, k, c, s) = 2 \cdot N_{cells} \cdot M_s \cdot y + N_{cells} \cdot M_s \cdot k + M_s \cdot c + s$, where each parameter in $Pri_{CSI}(y, k, c, s)$ is described as follows.

Parameter $y$: for an aperiodic CSI report scheduled to be carried on a PUSCH, the value of the parameter $y$ may be 0. For a semi-persistent CSI report scheduled to be carried on a PUSCH, the value of the parameter $y$ may be 1. For a semi-persistent CSI report scheduled to be carried on a PUCCH, the value of the parameter $y$ may be 2. For a periodic CSI report scheduled to be carried on a PUCCH, the value of $y$ may be 3, and so on.

Parameter $k$: the value of the parameter $k$ may be determined according to a type of information to be contained in a CSI report indicated by information (such as a report parameter (*reportQuantity*)) in *CSI-ReportConfig*. For example, for a CSI report containing L1-RSRP or L1-SINR, the value of the parameter $k$ may be 0. For a CSI report not containing L1-RSRP or L1-SINR, the value of the parameter $k$ may be 1, and so on.

Parameter $c$: the value of the parameter $c$ may be a serving cell index.

Parameter $s$: the value of the parameter $s$ may be the value of a report configuration index (*reportConfigID*) in *CSI-ReportConfig*.

Parameter $N_{cells}$: the value of the parameter $N_{cells}$ may be the value of a higher-layer parameter, i.e., the maximum number of serving cells (*maxNrofServingCells*).

Parameter $M_s$: the value of the parameter $M_s$ may be the value of a higher-layer parameter, i.e., the maximum number of CSI report configurations (*maxNrofCSI-ReportConfigurations*).

It may be noted that as specified in the standard protocol, the name of the maximum number of serving cells is *maxNrofServingCells,* the name of the CSI report configuration index is *reportConfigID,* and the name of the maximum number of CSI report configurations is *maxNrofCSI-ReportConfigurations.* In addition, the names with the same meanings specified in other standards are applicable to this disclosure, and in other words, the names of these parameters are not limited in this disclosure.

2) Comparison of priority of CSI report

Since each CSI report is associated with one priority value, if a priority value $Pri_{CSI}(y, k, c, s)$ associated with a certain CSI report is lower than a priority value $Pri_{CSI}(y, k, c, s)$ associated with another CSI report, a priority of the certain CSI report is higher than a priority of the another CSI report.

3) Collision mechanism for CSI report

If two CSI reports are transmitted on the same carrier and overlap in at least one symbol in the time domain, the two CSI reports will collide during the transmission.

When the terminal device is configured to transmit two colliding CSI reports, if the values of the parameter $y$ are different between the two CSI reports, the following rules apply except for the case where one of the values of the parameter $y$ is 2 and the other one of the values of the parameter $y$ is 3. The CSI report with a higher priority value $Pri_{CSI}(y, k, c, s)$ is not transmitted by the terminal device. Otherwise, the two CSI reports are multiplexed or either is dropped based on the priority values.

It may be noted that, for related contents/concepts/definitions/explanations in "8. Priority of CSI report", reference can be made to corresponding sections in the standard protocol (e.g., 3GPP 38.214), which is not limited herein. In addition, the related contents/concepts/definitions/explanations in "8. Priority of CSI report" may be modified in accordance with modification/change of the standard protocol (e.g., 3GPP 38.214). Those skilled in the art can also deduce/obtain modified contents in combination with the related contents/concepts/definitions/explanations in "8. Priority of CSI report". Therefore, the modified contents are also within the protection scope of claims of the disclosure, which will not be repeated herein.

9. CPU occupied by CSI report

1) Description

The terminal device can indicate the number $N_{CPU}$ of supported simultaneous CSI calculations with a higher-layer parameter (such as simultaneous CSI reports per component carrier (CC) (*simultaneousCSI-ReportsPerCC*)) in a CC.

The terminal device can indicate the number $N_{CPU}$ of supported simultaneous CSI calculations with a higher-layer parameter (such as simultaneous CSI reports across all CCs (*simultaneousCSI-ReportsAllCC*)).

If the terminal device supports $N_{CPU}$ simultaneous CSI calculations, the terminal device is said to have $N_{CPU}$ CPUs for processing CSI reports.

It may be noted that, the CPU occupied by the CSI report can represent the capability of the terminal device to process CSI. $N_{CPU}$ may be understood as the maximum number or total number of CPUs supported by the terminal device. In addition, $N_{CPU}$ can be reported to the network device by the terminal device through a higher-layer parameter (e.g., *simultaneousCSI-ReportsPerCC* and/or *simultaneousCSI-ReportsAllCC*).

If $L$ CPUs are occupied for calculation of CSI reports in a given symbol, the terminal device has $N_{CPU} - L$ unoccupied CPUs.

If $N$ CSI reports start occupying their respective CPUs on the same symbol on which $N_{CPU} - L$ CPUs are unoccupied, where the number of CPUs occupied by the $n$-th ($n = 0, ..., N - 1$) CSI report is $O_{CPU}^{(n)}$, the terminal device is not required to update $N - M_1$ CSI reports with lowest priority, and $M_1$ ($0 \leq M_1 \leq N$) is the largest value such that $\sum_{n=0}^{M_1-1} O_{CPU}^{(n)} \leq N_{CPU} - L$ holds.

For example, the network device configures three CSI reports for the terminal device, namely CSI report 0, CSI report 1, and CSI report 2. Among priorities of the three CSI reports, a priority of CSI report 0 is higher than a priority of CSI report 1, and the priority of CSI report 1 is higher than a priority of CSI report 2. In the case where the terminal device has 10 unoccupied CPUs, if CSI report 0 occupies 5 CPUs (i.e., $O_{CPU}^{(0)} = 5$), CSI report 1 occupies 3 CPUs (i.e., $O_{CPU}^{(1)} = 3$), and CSI report 2 occupies 5 CPUs (i.e., $O_{CPU}^{(2)} = 5$), then since 5+3+5>10, the terminal device is not required to update CSI report 2.

2) The number of CPUs occupied by a CSI report

The number $O_{CPU}$ of CPUs occupied by a CSI report may be as follows.

If *reportQuantity* in *CSI-ReportConfig* is set to 'none' and a higher-layer parameter *trs-Info* is configured in *CSI-RS-ResourceSet*, $O_{CPU} = 0$. That is, the number of CPUs occupied by the CSI report is 0.

If *reportQuantity* in *CSI-ReportConfig* is set to 'cri-RSRP', 'ssb-Index-RSRP', 'cri-SINR', 'ssb-Index-SINR', or 'none' (in this case, *trs-Info* is not configured in *CSI-RS-ResourceSet*), $O_{CPU} = 1$. That is, the number of CPUs occupied by the CSI report is 1.

If the higher-layer parameter *reportQuantity* in *CSI-ReportConfig* is set to 'cri-RI-PMI-CQI', 'cri-RI-i1', 'cri-RI-i1-CQI', 'cri-RI-CQI', or 'cri-RI-LI-PMI-CQI', then:

if max ($\mu_{PDCCH}$, $\mu_{CSI-RS}$, $\mu_{UL}$) < 3, a CSI report is aperiodically triggered without transmitting a PUSCH with a transport block (or HARQ-ACK or both) when $L = 0$ CPUs are occupied, where the CSI corresponds to a single CSI with wideband frequency-granularity and to at most 4 CSI-RS ports in a single resource, and where *codebookType* is set to 'typeI-SinglePanel' or *reportQuantity* is set to 'cri-RI-CQI', then $O_{CPU} = N_{CPU}$. That is, the number of CPUs occupied by the CSI report is the total number of CPUs reported by the terminal device. Herein, $\mu_{PDCCH}$ corresponds to a subcarrier spacing of a PDCCH transmitting DCI, $\mu_{UL}$ corresponds to a subcarrier spacing of a PUSCH carrying CSI, *and* $\mu_{CSI-RS}$ corresponds to a subcarrier spacing of an aperiodic CSI-RS triggered by DCI.

if *codebookType* in *CSI-ReportConfig* corresponding to a CSI report is set to 'typeI-SinglePanel', and a corresponding CSI-RS resource set for channel measurement is configured with 2 resource groups, $N$ resource pairs, and $M$ resources for single-station transmission assumption, then $O_{CPU} = 2N + M$. That is, the number of CPUs occupied by the CSI report is $2N + M$.

otherwise, $O_{CPU} = K_s$, where $K_s$ is the number of NZP-CSI-RS resources (also referred to as channel measurement resources) in *NZP-CSI-RS-ResourceSet* for channel measurement. That is, the number of CPUs occupied by the CSI report is the number of channel measurement resources associated with the CSI report.

3) The number of orthogonal frequency division multiplexing (OFDM) symbols occupied by a CPU

For a CSI report with *CSI-ReportConfig* with *reportQuantity* not set to 'none', the CPU(s) are occupied by the CSI report for a number of OFDM symbols as follows.

A periodic or semi-persistent CSI report (excluding an initial semi-persistent CSI report on PUSCH after the PDCCH triggering the report) occupies CPU(s) from the first OFDM symbol of the earliest one of each CSI-RS/CSI-IM/SSB resource for channel or interference measurement, respective latest CSI-RS/CSI-IM/SSB occasion no later than the corresponding CSI reference resource, until the last OFDM symbol of a reporting resource, where the reporting resource is a PUSCH/PUCCH carrying the periodic or semi-persistent CSI report.

An aperiodic CSI report occupies CPU(s) from the first OFDM symbol after the PDCCH triggering the aperiodic CSI report until the last OFDM symbol of a reporting resource, where the reporting resource is a PUSCH carrying the aperiodic CSI report.

An initial semi-persistent CSI report on PUSCH after the PDCCH trigger occupies CPU(s) from the first OFDM symbol after the PDCCH until the last OFDM symbol of a reporting resource, where the reporting resource is a PUSCH carrying the initial semi-persistent CSI report.

For a CSI report with *CSI-ReportConfig* with *reportQuantity* set to 'none' and *CSI-RS-ResourceSet* with *trs-Info* not configured, the CPU(s) are occupied by the CSI report for a number of OFDM symbols as follows.

A semi-persistent CSI report (excluding an initial semi-persistent CSI report on PUSCH after the PDCCH triggering the report) occupies CPU(s) from the first OFDM symbol of the earliest one of each transmission occasion of periodic or semi-persistent CSI-RS/SSB resources for channel measurement for L1-RSRP computation, until $Z_3'$ OFDM symbols after the last OFDM symbol of the latest one of the CSI-RS/SSB resources for channel measurement for L1-RSRP computation in each transmission occasion.

An aperiodic CSI report occupies CPU(s) from the first OFDM symbol after the PDCCH triggering the CSI report until the last OFDM symbol between $Z_3$ OFDM symbols after the first OFDM symbol after the PDCCH triggering the CSI report and $Z_3'$ OFDM symbols after a measurement resource, where the measurement resource is the latest one of each CSI-RS/SSB resource for channel measurement for L1-RSRP computation.

It may be noted that, for related contents/concepts/definitions/explanations in "9. CPU occupied by CSI report", reference can be made to corresponding sections in the standard protocol (e.g., 3GPP 38.214), which is not limited herein. In addition, the related contents/concepts/definitions/explanations in "9. CPU occupied by CSI report" may be modified in accordance with modification/change of the standard protocol (e.g., 3GPP 38.214). Those skilled in the art can also deduce/obtain modified contents in combination with the related contents/concepts/definitions/explanations in "9. CPU occupied by CSI report". Therefore, the modified contents are also within the protection scope of claims of the disclosure, which will not be repeated herein.

10. CSI computation time requirement of CSI report

When the CSI request field on a DCI triggers a CSI report(s) on PUSCH, if the first uplink symbol to carry the CSI report(s) (including the effect of the timing advance) starts no earlier than at symbol $Z_{ref}$, and if the first uplink symbol to carry the n-th CSI report (including the effect of the timing advance) starts no earlier than at symbol $Z'_{ref}(n)$, the terminal device shall provide a valid CSI report for the n-th triggered report.

$Z_{ref}$ is defined as the next uplink symbol with its cyclic prefix (CP) starting $T = (Z)(2048 + 144) \cdot \kappa 2^{-\mu} \cdot T_c + T_{switch}$ after the end of the last symbol of the PDCCH triggering the CSI report(s).

$Z'_{ref}(n)$ is defined as the next uplink symbol with its CP starting $T' = (Z')(2048 + 144) \cdot \kappa 2^{-\mu} \cdot T_c$ after the end of the last symbol of a measurement resource. The measurement resource is in time of the latest of: aperiodic CSI-RS resource for channel measurement (when aperiodic CSI-RS is used for channel measurement for the n-th triggered CSI report), aperiodic CSI-IM for interference measurement, and aperiodic NZP CSI-RS for interference measurement.

When the CSI request field on a DCI triggers a CSI report(s) on PUSCH, if the first uplink symbol to carry the CSI report(s) (including the effect of the timing advance) starts earlier than at symbol $Z_{ref}$, the terminal device may ignore the DCI if no HARQ-ACK or transport block is multiplexed on the PUSCH. In other words, the terminal device may not report the CSI report(s) triggered by the DCI.

When the CSI request field on a DCI triggers a CSI report(s) on PUSCH, if the first uplink symbol to carry the n-th CSI report (including the effect of the timing advance) starts earlier than at symbol $Z'_{ref}(n)$, the terminal device may ignore the DCI if the number of triggered CSI reports is one and no HARQ-ACK or transport block is multiplexed on the PUSCH. Otherwise, the terminal device is not required to update the CSI for the n-th triggered CSI report.

Definitions of $Z$ and $Z'$

In embodiments of the disclosure, the CSI computation time requirement of the CSI report may be determined according to $(Z, Z')$, where $Z = \max\limits_{m=0,...,M-1}(Z(m))$, $Z' = \max\limits_{m=0,...,M-1}(Z'(m))$, and $M$ is the number of updated CSI report(s).

$(Z(m), Z'(m))$ corresponds to the m-th updated CSI report and is defined as follows.

If max $(\mu_{PDCCH}, \mu_{CSI-RS}, \mu_{UL}) < 3$, a CSI report is aperiodically triggered without a PUSCH with either transport block or HARQ-ACK or both when $L = 0$ CPUs are occupied, and the CSI to be transmitted is a single CSI and corresponds to wideband frequency-granularity where the CSI corresponds to at most 4 CSI-RS ports in a single resource and where *codebookType* is set to 'typeI-SinglePanel' or where *reportQuantity* is set to 'cri-RI-CQI', then $(Z(m), Z'(m))$ is defined as $(Z_1, Z'_1)$ of Table 3.

Table 3 CSI computation delay requirement 1

| $\mu$ | $Z_1$ [symbols] | |
|---|---|---|
| | $Z_1$ | $Z'_1$ |
| 0 | 10 | 8 |
| 1 | 13 | 11 |
| 2 | 25 | 21 |
| 3 | 43 | 36 |

In the above, $\mu$ is subcarrier spacing configuration and corresponds to min $(\mu_{PDCCH}, \mu_{CSI-RS}, \mu_{UL})$, $\mu_{PDCCH}$ corresponds to the subcarrier spacing of the PDCCH with which the DCI was transmitted, $\mu_{UL}$ corresponds to the subcarrier spacing of the PUSCH with which the CSI is carried, and $\mu_{CSI-RS}$ corresponds to the subcarrier spacing of the aperiodic CSI-RS triggered by the DCI.

If the CSI to be transmitted corresponds to wideband frequency-granularity where the CSI corresponds to at most 4 CSI-RS ports in a single resource and where *codebookType* is set to 'typeI-SinglePanel' or where *reportQuantity* is set to 'cri-RI-CQI', then $(Z(m), Z'(m))$ is defined as $(Z_1, Z'_1)$ of Table 4.

Table 4 CSI computation delay requirement 2

| $\mu$ | $Z_1$ [symbols] | | $Z_2$ [symbols] | | $Z_3$ [symbols] | |
|---|---|---|---|---|---|---|
| | $Z_1$ | $Z'_1$ | $Z_2$ | $Z'_2$ | $Z_3$ | $Z'_3$ |
| 0 | 22 | 16 | 40 | 37 | 22 | $X_0$ |
| 1 | 33 | 30 | 72 | 69 | 33 | $X_1$ |
| 2 | 44 | 42 | 141 | 140 | min(44, $X_2$+KB$_1$) | $X_2$ |
| 3 | 97 | 85 | 152 | 140 | min(97, $X_3$+KB$_2$) | $X_3$ |

In the above, $\mu$ is subcarrier spacing configuration and corresponds to min $(\mu_{PDCCH}, \mu_{CSI-RS}, \mu_{UL})$.

If the CSI to be transmitted corresponds to wideband frequency-granularity where *reportQuantity* is set to 'ssb-Index-SINR' or 'cri-SINR', then $(Z(m), Z'(m))$ is defined as $(Z_1, Z'_1)$ of Table 4.

If *reportQuantity* is set to 'cri-RSRP' or 'ssb-Index-RSRP', $(Z(m), Z'(m))$ is defined as $(Z_3, Z'_3)$ of Table 4, where $X_\mu$ is determined according to beam-report-timing capability (*beamReportTiming*) reported by the terminal device, and KB$_l$ is determined according to beam-switch-timing capability (*beamSwitchTiming*) reported by the terminal device.

Otherwise, $(Z(m), Z'(m))$ is defined as $(Z_2, Z'_2)$ of Table 4.

It may be noted that, for related contents/concepts/definitions/explanations in "10. CSI computation time requirement of CSI report", reference can be made to corresponding sections in the standard protocol (e.g., 3GPP 38.214), which is not limited herein. In addition, the related contents/concepts/definitions/explanations in "10. CSI computation time requirement of CSI report" may be modified in accordance with modification/change of the standard protocol (e.g., 3GPP 38.214). Those skilled in the art can also deduce/obtain modified contents in combination with the related contents/concepts/definitions/explanations in "10. CSI computation time requirement of CSI report". Therefore, the modified contents are also within the protection scope of claims of the disclosure, which will not be repeated herein.

IV. Enhanced CSI framework

In combination with the above contents, a terminal device may obtain measurement results by performing channel measurement and/or interference measurement based on CSI-RS resources, and then carry these measurement results in a CSI report to achieve CSI reporting.

However, with the increasingly complex and diverse communication requirements, in the disclosure, the CSI report may need to contain a measurement result (which is referred to as "a first measurement result" for ease of differentiation and description) obtained by performing measurement based on a TRS resource and/or a measurement result (which is referred to as "a second measurement result" for ease of differentiation and description) obtained by performing measurement based on one or more CSI-RS transmission occasions.

In embodiments of the disclosure, the CSI report containing the first measurement result can be regarded as an enhancement to CSI reporting/feedback for the following reasons.

Currently, when a CSI-RS resource is configured as an aperiodic TRS resource, *reportQuantity* in *CSI-ReportConfig* may be set to 'none'. In this case, the terminal device does not have to perform CSI reporting/feedback, i.e., does not report/feed back any measurement result. When the CSI-RS resource is configured as a periodic TRS resource, since the current standard protocol does not support associating the periodic TRS resource with *CSI-ReportConfig,* CSI reporting/feedback does not exist.

That is to say, currently, the measurement result obtained by performing measurement based on the TRS resource is intended for only the terminal device, and the measurement result is not reported/fed back to a network device.

However, the measurement result (i.e., the first measurement result) obtained by performing measurement based on the TRS resource (regardless of the aperiodic TRS resource or periodic TRS resource) by the terminal device of embodiments of the disclosure needs to be reported/fed back to the network device. As such, the CSI report needs to contain the first measurement result, and thus CSI reporting/feedback can be enhanced.

In embodiments of the disclosure, the CSI report containing the second measurement result can be regarded as an enhancement to CSI reporting/feedback for the following reasons.

A CSI-RS transmission occasion may be a CSI-RS resource in the time domain. The terminal device of embodiments of the disclosure may obtain the measurement result (i.e., the second measurement result) by performing measurement based on the one or more CSI-RS transmission occasions. Since the second measurement result includes more/new CSI information, which is then contained in the CSI report for reporting/feedback, CSI reporting/feedback can be enhanced. In addition, since the more/new CSI information is conducive to improving the accuracy of evaluating the downlink channel quality, the transmission performance can be improved, and complex and diverse transmission requirements can be satisfied.

In addition, the CSI framework described above in "III. CSI framework" may not be adapted to such a CSI report (i.e., the CSI report containing the first measurement result and/or the second measurement result). Therefore, in the disclosure, the CSI framework needs to be enhanced to adapt to such a CSI report.

The technical solutions, beneficial effects, concepts, enhanced CSI framework, and the like involved in embodiments of the disclosure will be described in detail below.

1. First CSI report

Since the case where the CSI report contains the first measurement result and/or the second measurement result needs to be discussed in embodiments of the disclosure, for ease of differentiation and description, the CSI report containing the first measurement result and/or the second measurement result is referred to as the "first CSI report" in embodiments of the disclosure. Certainly, other terms can also be used for description, which is not limited herein.

That is to say, the first CSI report may be the CSI report containing the first measurement result and/or the second measurement result.

In some possible implementations, the first CSI report may further contain at least one of: L1-RSRP, L1-SINR, CSI-related quantities/CSI parameters, or the like.

The CSI-related quantities/CSI parameters may include at least one of: CRI, SSBRI, RI, PMI, CQI, LI, or the like.

2. TRS resource

It may be noted that in embodiments of the disclosure, the CSI-RS resource can be configured as the TRS resource through a higher-layer parameter.

For example, in embodiments of the disclosure, information (e.g., *trs-Info*) is introduced in *CSI-ResourceConfig,* that is, *CSI-ResourceConfig* contains the information, where the information can be used to configure the TRS resource.

For ease of differentiation and description, the information may be referred to as "first configuration information". Certainly, other terms such as TRS configuration information and TRS information can also be used for description, which is not limited herein.

In some possible implementations, the TRS resource may be periodic or aperiodic.

For example, in embodiments of the disclosure, information (e.g., *resourceType*) is introduced in *CSI-ResourceConfig,* that is, *CSI-ResourceConfig* contains the information, where the information can be used to configure the TRS resource to be periodic or aperiodic.

For ease of differentiation and description, the information may be referred to as "second configuration information". Certainly, other terms such as TRS configuration information and TRS information can also be used for description, which is not limited herein.

3. First measurement result

In embodiments of the disclosure, the first measurement result may be a measurement result obtained by performing measurement based on a TRS resource.

It may be understood that, the terminal device of the disclosure may obtain the first measurement result by performing measurement based on the TRS resource, and then the first measurement result is contained in a CSI report for reporting/feedback, thereby enhancing CSI reporting/feedback.

In some possible implementations, the first measurement result may indicate/represent/describe change features of a downlink channel in the time domain (or time-domain change features of the downlink channel) or time-domain characteristics of the downlink channel, etc.

It may be understood that, the measurement result obtained by performing measurement on the downlink channel based on the TRS resource by the terminal device may represent the change features of the downlink channel in the time domain.

In some possible implementations, the first measurement result includes a time-domain channel property (TDCP).

It may be noted that, the time-domain channel property includes at least one of: Doppler shift, Doppler spread, delay spread, average delay, differential Doppler shift, differential Doppler spread, differential delay spread, differential average delay, Doppler shift change-rate, Doppler spread change-rate, delay spread change-rate, average delay change-rate, cross-correlation in time, relative Doppler shift, Doppler domain vector, Doppler domain codebook/codeword, time-domain vector, or time-domain codebook/codeword.

In some possible implementations, the time-domain channel property may include the rest information for representing the time-domain change characteristics/time-domain features of the downlink channel except the above information. Alternatively, the time-domain channel property may include the above information and the rest information for representing the time-domain change characteristics/time-domain features of the downlink channel, which is not limited herein.

4. CSI-RS transmission occasion

It may be noted that, the CSI-RS transmission occasion may be understood as a CSI-RS resource in the time domain, or a time-domain location of the CSI-RS resource, or a time-domain location of/corresponding to/occupied by/associated with a CSI-RS, or a moment (or a time point) of/corresponding to/occupied by/associated with the CSI-RS, or a time unit of/corresponding to/occupied by/associated with the CSI-RS, or one CSI-RS resource, or one CSI-RS resource at a certain time in the time domain, or multiple CSI-RS resources at a certain time in the time domain, etc., which is not limited herein.

In embodiments of the disclosure, a time unit may be understood as a communication granularity in the time domain. For example, the time unit may be a subframe, a slot, a symbol, or a mini slot, etc., which is not limited herein. In other words, the time unit described in the disclosure may be one of a subframe, a slot, a symbol, and a mini slot.

5. One or more CSI-RS transmission occasions

In embodiments of the disclosure, in combination with "4. CSI-RS transmission occasion" above, the one or more CSI-RS transmission occasions may include multiple CSI-RS resources with different time-domain locations, or may include multiple time-domain locations/times/moments/time units for transmission of the CSI-RS.

It may be understood that, the multiple CSI-RS resources each have a different time-domain location. In other words, the multiple CSI-RS resources correspond to/occupy/are associated with different time-domain locations, or the CSI-RS resources are at different time-domain locations.

It may be noted that, the multiple CSI-RS resources with different time-domain locations may also refer to one of:

multiple CSI-RS resources with different moments/times/occasions, which may be understood as multiple CSI-RS resources corresponding to/occupying/associated with different moments/times/occasions or CSI-RS resources transmitted at different moments;

multiple CSI-RS resources with different time units, which may be understood as multiple CSI-RS resources corresponding to/occupying/associated with different time units or CSI-RS resources transmitted in different time units. For example, in the case where the time unit is a slot, if a first CSI resource is transmitted in slot 1 and a second CSI resource is transmitted in slot 2, then it indicates that the first CSI resource includes slot 1 and the second CSI resource includes slot 2;

different moments/times/time-domain locations corresponding to the same CSI-RS resource, which may be understood as repetitions of the same CSI-RS resource at different moments/times/time-domain locations;

and the like.

That is to say, the CSI-RS transmission occasion may be understood as a moment of/corresponding to/occupied by/associated with transmission of the CSI-RS, or a time of/corresponding to/occupied by/associated with transmission of the CSI-RS, or a time unit of/corresponding to/occupied by/associated with transmission of the CSI-RS, or a time-domain location of/corresponding to/occupied by/associated with transmission of the CSI-RS, or a time/moment/time unit/time-domain location for transmission of the CSI-RS, etc., which is not limited herein.

In this disclosure, the multiple CSI-RS resources with different time-domain locations are mainly taken as an example for illustration below, and the same also applies to other cases.

6. Multiple CSI-RS resources with different time-domain locations

In embodiments of the disclosure, the multiple CSI-RS resources with different time-domain locations may include multiple repetitions of one CSI-RS resource at different time-domain locations, and may also include multiple CSI-RS resources in the time domain, etc. Detailed illustration will be given below.

It may be noted that, the multiple repetitions of one CSI-RS resource at different time-domain locations may be understood as repetitions of one CSI-RS in the time domain, where these repeated CSI-RSs have different time-domain locations in the time domain but may have the same frequency-domain location in the frequency domain. The number of repetitions may be 1 or may be greater than 1, which is not limited herein. The repetitions described in the disclosure can be considered as repeated transmissions of a signal in the time domain, but spatial-domain information (such as beams) of the signal at different time-domain locations may be the same or different, which is not limited in the disclosure.

For example, in the disclosure, a CSI-RS resource can be configured according to *CSI-ResourceConfig,* and the number of repetitions of the CSI-RS resource in the time domain and/or a time interval between adjacent repetitions of the CSI-RS resource can be configured/indicated according to higher-layer signaling/a higher-layer parameter, etc. The higher-layer signaling/higher-layer parameter may include at least one of RRC signaling, MAC signaling (such as MAC CE), DCI, or the like.

The multiple CSI-RS resources in the time domain may mean that these CSI-RS resources have different time-domain locations in the time domain, but may have the same frequency-domain location or different frequency-domain locations in the frequency domain, which is not limited herein.

For example, in the disclosure, the multiple CSI-RS resources in the time domain can be configured according to *CSI-ResourceConfig,* so as to determine multiple CSI-RS transmission occasions. Finally, in the disclosure, it can be determined according to an association relationship between *CSI-ReportConfig* and *CSI-ResourceConfig* that one CSI report is associated with the multiple CSI-RS transmission occasions.

7. Second measurement result

In embodiments of the disclosure, the second measurement result may be a measurement result obtained by performing measurement based on one or more CSI-RS transmission occasions.

It may be understood that, the terminal device of the disclosure may obtain the second measurement result by performing measurement based on the one or more CSI-RS transmission occasions. The second measurement result may include more/new CSI information, which is then contained in a CSI report for reporting/feedback, so that CSI reporting/feedback can be enhanced.

In some possible implementations, the second measurement result may include at least one of: compression information, prediction information, or multiple groups of information.

In some possible implementations, the second measurement result may further include at least one of: CRI, SSBRI, RI, PMI, CQI, LI, or the like.

### 1) Compression information

The compression information may be compressed information of channel information or CSI parameters corresponding to the one or more CSI-RS transmission occasions.

Therefore, in embodiments of the disclosure, the "compression information" can be regarded as the compressed information. The "channel information" or "CSI parameters" can be regarded as uncompressed information.

### ① Channel information, CSI parameters, CSI information

In embodiments of the disclosure, the channel information may represent channel features/characteristics of a downlink channel corresponding to the one or more CSI-RS transmission occasions. The CSI parameters may include at least one of: CRI, SSBRI, RI, PMI, CQI, LI, or the like.

In combination with "II. Channel matrix" above, the channel information in embodiments of the disclosure may include at least one of: the channel matrix $H$, the equivalent channel matrix, the precoding matrix $W$ (the precoding matrix $W$ may be derived from the channel matrix $H$), the right-singular vector $V$ of the channel matrix $H$, the eigen vector $v_i$ of the square matrix $H^T H$ (an eigen vector of a matrix obtained by multiplying the conjugate transpose $H^T$ of the channel matrix by the channel matrix $H$), a vector associated with the channel matrix $H$ (for example, a vector of the channel matrix $H$ under certain deformation, etc.), or the like.

In some possible implementations, the channel information may further include time-domain information of a channel, channel information of the delay-Doppler domain, and the like, which is not limited herein.

In some possible implementations, the channel information may further include CRI, SSBRI, RI, PMI, CQI, LI, and the like, which is not limited herein.

In combination with "4. Acquisition of channel matrix $H$" above, in some possible implementations, the channel information can be obtained by performing measurement based on downlink reference signals corresponding to the one or more CSI-RS transmission occasions.

It may be noted that, since the channel information may have characteristics such as a larger number of bits, and problems such as a larger quantity of occupied resources and large signaling overheads will be caused by directly feeding back the channel information, a manner of not directly feeding back the channel information is often used. In order to reduce the occupied resources and signaling overheads, etc., a manner of compressing the channel information is used in embodiments of the disclosure, so that the compressed channel information has characteristics such as a smaller number of bits.

Further, the CSI information described in the disclosure may include information/measurement results obtained through CSI measurement and/or information obtained through related processing (such as compression, prediction, etc.) of the information/measurement results, and the like. For example, the CSI information may include at least one of: CSI parameters, channel information, compression information, prediction information, multiple groups of information, CRI, SSBRI, RI, PMI, CQI, LI, or the like, which is not limited herein.

### ② Compressing

In embodiments of the disclosure, the compressing may include at least one of compression, quantization, encoding, or the like.

In specific implementation, the terminal device of embodiments of the disclosure may use a compressing module to compress the channel information or CSI parameters, and the compressed channel information has characteristics such as a smaller number of bits and a higher precision, thereby achieving a smaller quantity of occupied resources, smaller signaling overheads, and a higher precision.

In some possible implementations, the compressing module may be a software unit and/or a hardware unit that use artificial intelligence (AI) models/AI algorithms (such as convolutional neural network algorithms, deep neural network algorithms, etc.) for information processing.

Exemplarily, the terminal device may obtain compression information by inputting channel information to an AI module. That is, the compression information is compressed information of the channel information or CSI parameters from the AI module. Therefore, by taking advantage of the capability of the AI module to process a large amount of complex information/data and the capability of high processing precision, the channel information or CSI parameters can be compressed and the precision of the compression information can be ensured.

In some possible implementations, the terminal device may obtain the compression information through joint processing (such as compression) of the channel information corresponding to the one or more CSI-RS transmission occasions according to the correlation of the channel information corresponding to the one or more CSI-RS transmission occasions in the Doppler domain or time domain.

Certainly, in embodiments of the disclosure, the terminal device may also compress the channel information or CSI parameters in other manners to obtain the compression information.

For example, the other manners may be a lossy compression manner, a lossless compression manner, and the like. The lossy compression mainly involves some quantization algorithms such as a-law, u-law, lloyds, and other optimal quantization. The lossless compression mainly involves some coding algorithms such as subband coding, differential coding, Huffman coding, and the like.

③ Exemplary description

As above mentioned, the terminal device can obtain channel information or CSI parameters by performing measurement based on one or more CSI-RS transmission occasions, obtain compression information by compressing the channel information or CSI parameters, and report the compression information to the network device via a CSI report. Correspondingly, the network device can accordingly decompress the compression information to obtain the channel information or CSI parameters.

For example, when an AI module is used for compression, the terminal device obtains channel information or CSI parameters by performing measurement based on one or more CSI-RS transmission occasions, obtains compression information by inputting the channel information or CSI parameters to the AI module for compression, and then transmits the compression information to the network device on a PUSCH or PUCCH. Correspondingly, the network device inputs the compression information to the AI module for decompression to obtain the channel information.

For another example, when an AI module is used for compression, the terminal device obtains channel information or CSI parameters by performing measurement based on one or more CSI-RS transmission occasions, obtains compression information by inputting the channel information or CSI parameters to the AI module for compression, quantization, encoding, etc., and finally transmits the compression information to the network device on a PUSCH or PUCCH. Correspondingly, the network device accordingly performs decoding, de-quantization, and other processing on the compression information, and then inputs the compression information to the AI module for decompression to obtain the channel information or CSI parameters.

For another example, the terminal device obtains channel information or CSI parameters by performing measurement based on one or more CSI-RS transmission occasions, obtains compression information through joint processing (such as compression) of the channel information or CSI parameters in the Doppler domain or the time domain, and then transmits the compression information to the network device on a PUSCH or PUCCH. Correspondingly, the network device processes the compression information to obtain the channel information or CSI parameters.

2) Prediction information

It may be noted that for the current CSI measurement, the terminal device obtains CSI parameters by performing channel measurement and/or interference measurement on a CSI-RS resource at a certain time-domain location or CSI-RS resources at multiple time-domain locations no later than a CSI reference resource, but the terminal device does not predict CSI parameters after a time-domain location of the CSI reference resource or after the one or more time-domain locations.

Since one or more CSI-RS transmission occasions are taken into consideration in the disclosure, the terminal device can predict channel information or CSI parameters corresponding to the one or more CSI-RS transmission occasions or one or more times/moments/time units/time-domain locations after time-domain locations of the one or more CSI-RS transmission occasions. Alternatively, the terminal device can predict channel information or CSI parameters corresponding to one or more times/moments/time units/time-domain locations after the time-domain location of the CSI reference resource. The channel information or CSI parameters can be regarded as prediction information obtained by the terminal device.

For example, the terminal device can obtain channel information or CSI parameters by performing measurement based on the one or more CSI-RS transmission occasions, then obtain a channel matrix $H$ corresponding to one or more times/moments/time units/time-domain locations after the one or more CSI-RS transmission occasions by performing an interpolation operation on the channel information or CSI parameters, and finally obtain the prediction information through processing of the channel matrix $H$.

As above mentioned, the prediction information may be channel information or CSI parameters corresponding to the one or more CSI-RS transmission occasions or one or more times/moments/time units/time-domain locations after time-domain locations of the one or more CSI-RS transmission occasions, or may be channel information or CSI parameters corresponding to one or more times/moments/time units/time-domain locations after the time-domain location of the CSI reference resource.

3) Multiple groups of information

It may be noted that for the current CSI measurement, the terminal device obtains CSI parameters by performing channel measurement and/or interference measurement on a CSI-RS resource at a certain time-domain location. Alternatively, for the CSI measurement, the terminal device obtains CSI parameters through joint processing of channel measurement and/or interference measurement of CSI-RS resources at multiple time-domain locations. These CSI parameters can be regarded as a group of CSI parameters.

Since one or more CSI-RS transmission occasions are taken into consideration in the disclosure, the terminal device can obtain channel information or CSI parameters by performing measurement based on the multiple CSI-RS transmission occasions. The channel information or CSI parameters can be regarded as multiple groups of information.

As above mentioned, the multiple groups of information may be multiple groups of channel information or multiple groups of CSI parameters corresponding to the one or more CSI-RS transmission occasions.

In some possible implementations, one group of information among the multiple groups of information may correspond to one CSI-RS transmission occasion or may correspond to multiple CSI-RS transmission occasions, which is not limited herein. The one group of information corresponding to the one CSI-RS transmission occasion may mean that the one group of information is obtained by the terminal device by performing measurement based on the one CSI-RS transmission occasion, and the same also applies to other cases.

In some possible implementations, the multiple groups of information may correspond to one CSI-RS transmission occasion or may correspond to multiple CSI-RS transmission occasions, which is not limited herein. The multiple groups of information corresponding to the one CSI-RS transmission occasion may mean that the multiple groups of information are obtained by the terminal device by performing measurement based on the one CSI-RS transmission occasion, and the same also applies to other cases.

8. The first CSI report is associated with the one or more CSI-RS transmission occasions

It may be noted that in the disclosure, it may be determined according to network configuration, network indication, pre-configuration, a specification in a protocol, etc., that the first CSI report is associated with the one or more CSI-RS transmission occasions. As such, by associating the first CSI report with the one or more CSI-RS transmission occasions, the terminal device can report via the first CSI report a measurement result obtained based on the one or more CSI-RS transmission occasions, which not only can enhance related configuration for CSI but also can enhance CSI reporting/feedback.

Taking the network configuration as an example, it may be determined in the disclosure according to a higher-layer parameter/configuration information/higher-layer signaling, etc., that one CSI report is associated with one or more CSI-RS transmission occasions.

Further, for example, when the higher-layer parameter or configuration information includes *CSI-ReportConfig* and *CSI-ResourceConfig,* it may be determined in the disclosure according to an association relationship between *CSI-ReportConfig* and *CSI-ResourceConfig* that the first CSI report is associated with the one or more CSI-RS transmission occasions. *CSI-ReportConfig* can be used to configure the first CSI report, and *CSI-ResourceConfig* can be used to configure the one or more CSI-RS transmission occasions.

It may be understood that in the disclosure, according to the higher-layer parameter or configuration information, *CSI-ReportConfig* and *CSI-ResourceConfig* can be configured and the association relationship between *CSI-ReportConfig* and *CSI-ResourceConfig* can be configured. As such, it may be determined according to the association relationship that the first CSI report configured by *CSI-ReportConfig* may be associated with the CSI-RS transmission occasions configured by *CSI-ResourceConfig* in the time domain, and thus the related configuration for CSI can be enhanced by associating one CSI report with multiple CSI-RS transmission occasions.

9. CSI measurement window and CSI reporting window

1) CSI measurement window

In embodiments of the disclosure, the CSI measurement window may indicate a duration or a time-domain location where the terminal device performs measurement. In other words, the terminal device needs to perform measurement on CSI-RS within a duration corresponding to the CSI measurement window.

It may be noted that, the network device can configure the CSI measurement window for the terminal device through a higher-layer parameter/higher-layer signaling/higher-layer information. In this way, the terminal device needs to perform measurement on TRS resources and/or CSI-RS resources within a duration corresponding to the CSI measurement window to obtain a first measurement result and/or perform measurement based on one or more CSI-RS transmission occasions to obtain a second measurement result.

Therefore, a time-domain location of the TRS resource of embodiments of the disclosure may be within the CSI measurement window, and the one or more CSI-RS transmission occasions may be within the CSI measurement window.

2) CSI reporting window

In embodiments of the disclosure, the CSI reporting window may indicate a duration and/or a time-domain location, etc. In this regard, time corresponding to information (such as channel information, CSI parameters, etc.) reported/fed back by the terminal device needs to be within a duration or time-domain location corresponding to the CSI reporting window. In other words, the terminal device needs to report/feed back channel information or CSI parameters corresponding to one or more times corresponding to the CSI reporting window. It may also be understood that, the information (such as the channel information, CSI parameters, etc.) reported/fed back by the terminal device is associated with the CSI reporting window.

The time corresponding to the information may mean that the terminal device obtains the information by performing measurement according to the CSI-RS within that time, or obtains the information by predicting channel information corresponding to that time according to a measurement result obtained before that time.

It may be noted that, the network device can configure the CSI reporting window for the terminal device through a higher-layer parameter/higher-layer signaling/higher-layer information/downlink control information, etc. In this way, time corresponding to the first measurement result and/or the second measurement result reported/fed back by the terminal device is within the duration or time-domain location corresponding to the CSI reporting window. That is to say, the first measurement result and/or the second measurement result correspond to the CSI reporting window.

3) Location relationship between CSI measurement window and CSI reporting window

It may be noted that, a starting location of the CSI measurement window may precede or overlap a starting location of the CSI reporting window.

An ending location of the CSI measurement window may precede or overlap an ending location of the CSI reporting window.

As can be seen, a duration corresponding to the CSI measurement window may completely overlap or partially overlap a duration corresponding to the CSI reporting window, and a measurement result corresponding to a duration of a non-overlapping part in the CSI reporting window can be regarded as prediction information obtained by the terminal device.

For example, as illustrated in FIG. 2, the starting location of the CSI measurement window is A, the ending location of the CSI measurement window is C, the starting location of the CSI reporting window is B, and the ending location of the CSI reporting window is D. Therefore, a duration AB and a duration CD are non-overlapping parts. A measurement result corresponding to the duration CD may be the prediction information.

10. How to determine that the first CSI report contains the first measurement result and/or the second measurement result

In combination with "2. TRS resource" above, in some possible implementations, if *CSI-ResourceConfig* contains the first configuration information, it indicates that the network device configures the TRS resource for the terminal device. In this way, the terminal device can obtain the first measurement result by performing measurement based on the TRS resource and needs to report/feed back the first measurement result, so that the first CSI report needs to contain the first measurement result.

That is to say, if *CSI-ResourceConfig* contains the first configuration information, the first CSI report may contain the first measurement result.

In some possible implementations, if *CSI-ResourceConfig* contains information (which may be referred to as "third configuration information" or another term for ease of differentiation and description) for configuring one or more CSI-RS transmission occasions, it indicates that the network device configures the one or more CSI-RS transmission occasions for the terminal device. As such, the terminal device can obtain the second measurement result by performing measurement based on the one or more CSI-RS transmission occasions and needs to report/feed back the second measurement result, so that the first CSI report needs to contain the second measurement result.

That is to say, if *CSI-ResourceConfig* contains the third configuration information, the first CSI report may contain the second measurement result.

As above mentioned, if *CSI-ResourceConfig* contains the first configuration information and the third configuration information, the first CSI report may contain the first measurement result and the second measurement result.

In some possible implementations, *CSI-ReportConfig* may contain information (which may be referred to as "first indication information" or another term for ease of differentiation and description) indicating the first CSI report to contain the first measurement result and/or the second measurement result.

That is to say, the network can configure the first CSI report through *CSI-ReportConfig* and indicate through the first indication information in *CSI-ReportConfig* that the first CSI report needs to contain the first measurement result and/or the second measurement result.

11. Composition of first CSI report

1) Part 1 and Part 2

In combination with "7. CSI report on PUSCH" above, the first CSI report in embodiments of the disclosure may include Part 1 and Part 2. Part 1 has a fixed payload size and is used to identify the number of information bits in Part 2.

Since the size of Part 1 is fixed, and the size of Part 2 may vary and depend on Part 1, the disclosure can be implemented as follows. Some important information is placed in Part 1, and thus in the case where Part 2 is dropped, the terminal device can still report to the network device the important information as relevant references through Part 1, thereby avoiding loss of the important information. Some information that determines the size of Part 2 is placed in Part 1, and thus the network device can retrieve Part 2 according to that information to avoid blind retrieval of Part 2, thereby improving the retrieval efficiency.

In some possible implementations, Part 1 may contain all or part of information in the first measurement result and/or the second measurement result.

That is because all or part of the information in the first measurement result and/or the second measurement result can be used as important information or information that determines the size of Part 2. Therefore, all or part of the information in the first measurement result and/or the second measurement result is in Part 1, which is conducive to avoiding loss of the important information or avoiding blind retrieval of Part 2.

It may be noted that, the second measurement result may include compression information, prediction information, multiple groups of information, and may include information such as CRI, SSBRI, RI, PMI, CQI, LI, and the like. Among the compression information, prediction information, multiple groups of information, CRI, SSBRI, RI, PMI, CQI, LI, and the like, since some information (such as the CRI, CQI, etc.) may need to be in Part 1 and other information (such as the PMI, etc.) may need to be in Part 2, Part 1 may contain all or part of information in the second measurement result. Similarly, Part 2 may also contain all or part of the information in the second measurement result.

In some possible implementations, Part 2 may contain all or part of the information in the first measurement result and/or the second measurement result. As such, by placing all or part of the information in the first measurement result and/or the second measurement result in Part 2, it is conducive to increasing the flexibility and possibility of transmitting all or part of the information in the first measurement result and/or the second measurement result.

It may be noted that Part 1 and Part 2 contain different contents. For example, if Part 1 contains the first measurement result, Part 2 does not contain the first measurement result. If Part 1 contains all or part of the information in the second measurement result, Part 2 does not contain the all or part of the information in the second measurement result.

In some possible implementations, Part 1 may contain the first measurement result, and Part 2 may contain all or part of the information in the second measurement result. As such, the first measurement result is transmitted as important information.

In some possible implementations, Part 1 may contain all or part of the information in the second measurement result, and Part 2 may contain the first measurement result. As such, all or part of the information in the second measurement result is transmitted as important information.

2) Group 0 and group 1

It may be noted that, Part 2 in embodiments of the disclosure may include at least one of group 0, group 1, or group 2.

In some possible implementations, group 0 of Part 2 may contain all or part of information in the first measurement result and/or the second measurement result.

In some possible implementations, group 1 of Part 2 may contain all or part of information in the first measurement result and/or the second measurement result.

In some possible implementations, group 2 of Part 2 may contain all or part of information in the first measurement result and/or the second measurement result.

It may be noted that group 0, group 1 and group 2 each contain different contents. For example, if group 0 contains the first measurement result, group 1 and group 2 do not contain the first measurement result. If group 0 contains a first part of information in the second measurement result, group 1 and group 2 do not contain the first part of information.

In addition, group 0, group 1, and group 2 each may contain different parts of information in the second measurement result. For example, group 0 may contain the first part of information in the second measurement result, group 1 may contain a second part of information in the second measurement result, and group 2 may contain a third part of information in the second measurement result. The first part of information, the second part of information, and the third part of information are different from each other.

In some possible implementations, group 0 of Part 2 may contain the first measurement result, and group 1 or group 2 of Part 2 may contain all or part of information in the second measurement result.

In some possible implementations, group 0 of Part 2 may contain all or part of information in the second measurement result, and group 1 or group 2 of Part 2 may contain the first measurement result.

As above mentioned, in some possible implementations, all or part of information in the first measurement result and/or the second measurement result may be in one of: Part 1, group 0 of Part 2, group 1 of Part 2, and group 2 of Part 2.

12. Priority of first CSI report

In combination with "8. Priority of CSI report" above, the first CSI report is associated with a priority value

$$\mathrm{Pri}'_{CSI}(a, y', k', c', s'): \mathrm{Pri}'_{CSI}(a, y', k, c', s') = a \cdot N'_{cells} \cdot M'_s \cdot \quad y' + N'_{cells} \cdot M'_s \cdot k' + M'_s \cdot c' + s'$$

1) Value of parameter $y'$

In embodiments of the disclosure, the value of the parameter $y'$ may be determined based on a report type of the first CSI report.

In some possible implementations, the value of the parameter $y'$ may be the same as or different from the value of $y$ above.

For example, in the case where the value of the parameter $y'$ is the same as the value of $y$ above, if the first CSI report is an aperiodic CSI report scheduled to be carried on a PUSCH, the value of the parameter $y'$ may be 0. If the first CSI report is a semi-persistent CSI report scheduled to be carried on a PUSCH, the value of the parameter $y'$ may be 1. If the first CSI report is a semi-persistent CSI report scheduled to be carried on a PUCCH, the value of the parameter $y'$ may be 2. If the first CSI report is a periodic CSI report scheduled to be carried on a PUCCH, the value of the parameter $y'$ may be 3, and so on.

2) Value of parameter $k'$

In embodiments of the disclosure, the value of the parameter $k'$ may be determined according to a type of information to be contained in the first CSI report.

For example, the value of the parameter $k'$ may be determined according to a type of information to be contained in the first CSI report indicated by *reportQuantity* in *CSI-ReportConfig.*

It may be noted that in combination with "1. First CSI report", "3. First measurement result", and "7. Second measurement result" above, information contained in the first CSI report may include the first measurement result and/or the second measurement result, and may also include at least one of L1-RSRP, L1-SINR, CSI-related quantities/CSI parameters, or the like.

The first measurement result may include a time-domain channel property. The time-domain channel property includes at least one of: Doppler shift, Doppler spread, delay spread, average delay, differential Doppler shift, differential Doppler spread, differential delay spread, differential average delay, Doppler shift change-rate, Doppler spread change-rate, delay spread change-rate, average delay change-rate, cross-correlation in time, relative Doppler shift, Doppler domain vector, Doppler domain codebook/codeword, time-domain vector, or time-domain codebook/codeword.

The second measurement result may include at least one of: compression information, prediction information, or multiple groups of information.

In some possible implementations, the value of the parameter $k'$ may be the same as or different from the value of $k$ above.

In some possible implementations, the value of the parameter $k'$ may be one of 0, 0.5, 1, 2, 3, and the like.

It may be noted that for ease of differentiation and description, the parameter $k'$ may be referred to as a "first parameter" in embodiments of the disclosure. Therefore, the first parameter can be used to determine a priority value of the first CSI report, and the value of the first parameter can be determined according to the type of information contained in the first CSI report.

As can be seen from the above, the value of the first parameter may be a first value (such as 0, 0.5, 1, 2, 3, etc.), and the first value may be pre-configured, configured by a network, or specified in a protocol.

It may be noted that, the first value may refer to a certain fixed value, which is pre-configured, configured by a network, or specified in a protocol. Certainly, the first value can also be described in other terms, which is not limited herein.

3) Value of parameter *c'*

In embodiments of the disclosure, the value of the parameter *c'* may be the same as the value of the parameter *c* above. That is, the value of the parameter *c'* is a serving cell index.

4) Value of parameter *s'*

In embodiments of the disclosure, the value of the parameter *s'* can be determined according to a configuration identity of the first CSI report.
For example, the value of the parameter *s'* is the same as the value of the parameter *s* above. That is, the value of the parameter s' is the value of *reportConfigID* in *CSI-ReportConfig*.

5) Value of parameter $N'_{cells}$

In embodiments of the disclosure, the value of the parameter $N'_{cells}$ can be determined according to the maximum number of serving cells.

For example, the value of the parameter $N'_{cells}$ may be the same as the value of $N_{cells}$ above. That is, the value of the parameter $N'_{cells}$ is the value of *maxNrofServingCells* in *CSI-ReportConfig.*

In addition, in embodiments of the disclosure, the value of the parameter $N'_{cells}$ can also be determined according to the maximum number of serving cells configured with the first CSI report.

6) Value of parameter $M'_s$

In embodiments of the disclosure, the value of the parameter $M'_s$ can be determined according to the maximum number of the first CSI report configurations.

In addition, in embodiments of the disclosure, the value of the parameter $M'_s$ can be determined according to the maximum number of the first CSI reports.

For example, the value of the parameter $M'_s$ may be the same as the value of the parameter $M_s$. That is, the value of the parameter $M'_s$ is the value of *maxNrofCSI-ReportConfigurations* in *CSI-ReportConfig.*

7) Value of parameter *a*

In embodiments of the disclosure, the value of the parameter *a* can be determined according to a value range of the parameter *k'*. For example, if the value of the parameter *k'* is 0 or 1, the value of the parameter *a* may be 2. If the value of the parameter *k'* is one of 0, 0.5, 1, 2, and 3, the value of the parameter *a* may be 5.
In some possible implementations, the value of the parameter *a* may be an integer greater than 1.

8) Comparison of priority

If a priority value $\mathrm{Pri}'_{CSI}(a, y', k', c', s')$ associated with one first CSI report is lower than a priority value $\mathrm{Pri}'_{CSI}(a, y', k', c', s')$ associated with another first CSI report, a priority of the one first CSI report is higher than a priority of the another first CSI report.

If a priority value $\mathrm{Pri}'_{CSI}(a, y', k', c', s')$ associated with a first CSI report is lower than a priority value $\mathrm{Pri}_{CSI}(y, k, c, s)$ associated with a second CSI report, then a priority of the first CSI report is higher than a priority of the second CSI report, and the second CSI report is a CSI report that does not contain the first measurement result and/or the second measurement result.

13. CPU occupied by first CSI report

1) The number of CPUs occupied by the first CSI report

In combination with "9. CPU occupied by CSI report" above, the number $O'_{CPU}$ of CPUs occupied by the first CSI report may be as follows.

① $O'_{\text{CPU}} = O_{\text{CPU}}$

That is to say, $O'_{CPU}$ is the same as $O_{CPU}$ above. Hence, there may be the following cases.

If a higher-layer parameter *reportQuantity* in *CSI-ReportConfig* is set to 'none' and a higher-layer parameter *trs-Info* is configured in *CSI-RS-ResourceSet,* $O'_{CPU} = 0$. It may be noted that this manner may or may not exist, which is not limited herein.

If the higher-layer parameter *reportQuantity* in *CSI-ReportConfig* is set to 'cri-RSRP', 'ssb-Index-RSRP', 'cri-SINR', 'ssb-Index-SINR', or 'none' (in this case, the higher-layer parameter *trs-Info* is not configured in *CSI-RS-ResourceSet*), $O'_{CPU} = 1$. It may be noted that this manner may or may not exist, which is not limited herein.

If the higher-layer parameter *reportQuantity* in *CSI-ReportConfig* is set to 'cri-RI-PMI-CQI', 'cri-RI-i1', 'cri-RI-i1-CQI', 'cri-RI-CQI', or 'cri-RI-LI-PMI-CQI', then:

if max ($\mu_{PDCCH}$, $\mu_{CSI-RS}$, $\mu_{UL}$) < 3, the first CSI report is aperiodically triggered without transmitting a PUSCH with a transport block (or HARQ-ACK or both) when $L = 0$ CPUs are occupied, where the CSI corresponds to a single CSI with wideband frequency-granularity and to at most 4 CSI-RS ports in a single resource, and where *codebookType* is set to 'typeI-SinglePanel' (or *reportQuantity* is set to 'cri-RI-CQI'), then $O'_{CPU} = N_{CPU}$. That is, the number of CPUs occupied by the first CSI report may be the total number of CPUs reported by the terminal device.

if *codebookType* in *CSI-ReportConfig* corresponding to the first CSI report is set to 'typeI-SinglePanel', and a corresponding CSI-RS resource set for channel measurement is configured with 2 resource groups, *N* resource pairs, and *M* resources for single-station transmission assumption, then $O'_{CPU} = 2N + M$. That is, the number of CPUs occupied by the first CSI report is $2N + M$.

otherwise, $O'_{CPU} = K_s$, where $K_s$ is the number of NZP-CSI-RS resources except TRS resources (i.e., channel measurement resources except TRS resources) in *NZP-CSI-RS-ResourceSet* for channel measurement. That is, the number of CPUs occupied by the first CSI report is the number of channel measurement resources associated with the first CSI report.

② $O'_{CPU} \neq O_{CPU}$

That is to say, $O'_{CPU}$ may be different from $O_{CPU}$ above.

③ $O'_{CPU}$ can be determined according to $K_s$

$K_s$ may be the number of channel measurement resources except TRS resources in *NZP-CSI-RS-ResourceSet*.

That is to say, $O'_{CPU}$ can be determined according to the number of channel measurement resources except the TRS resource associated with the first CSI report.

For example, $O'_{CPU} = K_s, O'_{CPU} > K_s, O'_{CPU} < K_s$, or $O'_{CPU} = K_s + \sigma$, where $\sigma$ is an offset value that is pre-configured, configured by a network, or specified in a protocol.

④ $O'_{CPU}$ can be determined according to $K'_s$. $K'_s$ may be the number of channel measurement resources (including TRS resources) in *NZP-CSI-RS-ResourceSet*.

That is to say, $O'_{CPU}$ can be determined according to the number of channel measurement resources associated with the first CSI report.

⑤ $O'_{CPU}$ may be a second value

The second value may be pre-configured, configured by a network, or specified in a protocol.

It may be noted that, the second value may refer to a certain fixed value, which is pre-configured, configured by a network, or specified in a protocol. That is to say, $O'_{CPU}$ is pre-configured, configured by a network, or specified in a protocol. Certainly, the second value can also be described in other terms, which is not limited herein.

⑥ $O'_{CPU}$ can be determined according to the CSI measurement window and/or the CSI reporting window.

Optionally, $O'_{CPU}$ can also be determined according to durations corresponding to the CSI measurement window and/or the CSI reporting window.

Optionally, if the first CSI report contains the second measurement result, and the second measurement result includes compression information and/or multiple groups of information, then $O'_{CPU}$ can also be determined according to a duration corresponding to the CSI measurement window.

Optionally, if the first CSI report contains the second measurement result, and the second measurement result includes prediction information, then $O'_{CPU}$ can also be determined according to a duration corresponding to the CSI reporting window.

It may be noted that, in combination with "9. CSI measurement window and CSI reporting window" above, a certain quantity of channel measurement resources may correspond to/be configured within the durations corresponding to the CSI measurement window and/or the CSI reporting window. Therefore, in the disclosure, the number of channel measurement resources can be determined according to the CSI measurement window and/or the CSI reporting window, and $O'_{CPU}$ can be further determined according to the number of channel measurement resources, so that $O'_{CPU}$ can be determined according to the CSI measurement window and/or the CSI reporting window.

2) The number of OFDM symbols occupied by the CPU occupied by the first CSI report

It may be noted that, the number of OFDM symbols occupied by the CPU occupied by the first CSI report may be the same as that described above in "9. CPU occupied by CSI report", which will not be repeated herein.

For example, for the first CSI report with *CSI-ReportConfig* with *reportQuantity* not set to 'none', the CPU(s) are occupied by the first CSI report for a number of OFDM symbols as follows. If the first CSI report is a periodic or semi-persistent CSI report (excluding an initial semi-persistent CSI report on PUSCH after the PDCCH triggering the report), then the first CSI report occupies CPU(s) from the first OFDM symbol of the earliest one of each CSI-RS/CSI-IM/SSB resource for channel or interference measurement, respective latest CSI-RS/CSI-IM/SSB occasion no later than the corresponding CSI reference resource, until the last OFDM symbol of a reporting resource, where the reporting resource is a PUSCH/PUCCH carrying the periodic or semi-persistent CSI report.

14. CSI computation time requirement of first CSI report

In combination with "10. CSI computation time requirement of CSI report" above, the CSI computation time requirement ($Z_{CSI}$, $Z'_{CSI}$) of the first CSI report may be as follows.

① $(Z_{CSI}, Z'_{CSI}) \neq (Z(m), Z'(m))$ That is to say, ($Z_{CSI}$, $Z'_{CSI}$) is different from ($Z(m)$, $Z'(m)$) above. In other words, ($Z_{CSI}$, $Z'_{CSI}$) is not the same as ($Z(m)$, $Z'(m)$) above.

For example, $(Z_{CSI}, Z'_{CSI}) \neq (Z_1, Z'_1)$, or $(Z_{CSI}, Z'_{CSI}) \neq (Z_2, Z'_2)$, or $(Z_{CSI}, Z'_{CSI}) \neq (Z_3, Z'_3)$.

② $(Z_{CSI}, Z'_{CSI}) = (Z(m), Z'(m))$ That is to say, ($Z_{CSI}$, $Z'_{CSI}$) is the same as ($Z(m)$, $Z'(m)$) above.

For example, $(Z_{CSI}, Z'_{CSI}) = (Z_1, Z'_1)$, or $(Z_{CSI}, Z'_{CSI}) = (Z_2, Z'_2)$, or $(Z_{CSI}, Z'_{CSI}) = (Z_3, Z'_3)$.

③ ($Z_{CSI}$, $Z'_{CSI}$) can be determined according to ($Z(m)$, $Z'(m)$)

That is to say, ($Z_{CSI}$, $Z'_{CSI}$) may be associated with (correspond to/be mapped to, etc.) ($Z(m)$, $Z'(m)$).

For example, $(Z_{CSI}, Z'_{CSI}) = (Z_1 + \Delta z, Z'_1 + \Delta z')$, where $\Delta z$ and $\Delta z'$ may be positive or negative and may be the same as or different from each other, and $\Delta z$ and $\Delta z'$ may be pre-configured, configured by a network, or specified in a protocol.

④ ($Z_{CSI}$, $Z'_{CSI}$) can be determined according to CSI computation delay requirement 1 or CSI computation delay requirement 2

It may be noted that in combination with Table 3, CSI computation delay requirement 1 may indicate the values of ($Z_1$, $Z'_1$) for different values of $\mu$. For example, if $\mu = 0$, then $(Z_1, Z'_1) = (10,\ 8)$.

Therefore, in the disclosure, ($Z_{CSI}$, $Z'_{CSI}$) being determined according to CSI computation delay requirement 1 may mean that the value of ($Z_{CSI}$, $Z'_{CSI}$) is determined according to the value of ($Z_1$, $Z'_1$), as illustrated in Table 5.

Table 5 CSI computation time requirement of first CSI report

| $\mu$ | $Z_{CSI}$ [symbols] | |
|---|---|---|
| | $Z_{CSI}$ | $Z_{CSI}$ |
| 0 | $10+\Delta z_1$ | $8+\Delta z'_1$ |
| 1 | $13+\Delta z_2$ | $11+\Delta z'_2$ |
| 2 | $25+\Delta z_3$ | $21+\Delta z'_3$ |
| 3 | $43+\Delta z_4$ | $36+\Delta z'_4$ |

In Table 5, if $\mu = 0$, then $(Z_{CSI}, Z'_{CSI}) = (10 + \Delta z_1,\ 8 + \Delta z'_1)$, and similarly, the rest can be seen.

$\Delta z_m$ ($m = 1,2,3,4$) and $\Delta z'_m$ may be positive or negative and may be the same as or different from each other, and $\Delta z_m$ and $\Delta z'_m$ may be pre-configured, configured by a network, or specified in a protocol.

It may be noted that in combination with Table 4, CSI computation delay requirement 2 may indicate the values of $(Z_1, Z'_1), (Z_2, Z'_2)$ and/or ($Z_3$, $Z'_3$) for different values of $\mu$. For example, if $\mu = 0$, then $(Z_1, Z'_1) = (22,\ 16), (Z_2, Z'_2) = (40,\ 37), (Z_3, Z'_3) = (22,\ X0)$.

Therefore, in the disclosure, ($Z_{CSI}$, $Z'_{CSI}$) being determined according to CSI computation delay requirement 2 may mean that the value of ($Z_{CSI}$, $Z'_{CSI}$) is determined according to the value of ($Z_1$, $Z'_1$), and/or the value of ($Z_{CSI}$, $Z'_{CSI}$) is determined according to the value of ($Z_2$, $Z'_2$), and/or the value of ($Z_{CSI}$, $Z'_{CSI}$) is determined according to the value of ($Z_3$, $Z'_3$), as illustrated in Table 6.

In Table 6, if $\mu = 0$, then $(Z_{CSI}, Z'_{CSI}) = (22 + \Delta k_1,\ 16 + \Delta k'_1)$, or $(Z_{CSI}, Z'_{CSI}) = (40 + \Delta r_1,\ 37 + \Delta r'_1)$, or $(Z_{CSI}, Z'_{CSI}) = (22 + \Delta s_1,\ X0 + \Delta s'_1)$, and similarly, the rest can be seen.

Table 6 CSI computation time requirement of first CSI report

| $\mu$ | $Z_{CSI}$ | [symbols] | $Z_{CSI}$ [symbols] | | $Z_{CSI}$ [symbols] | |
|---|---|---|---|---|---|---|
| | $Z_1$ | $Z'_1$ | $Z_2$ | $Z'_2$ | $Z_3$ | $Z'_3$ |
| 0 | $22+\Delta k_1$ | $16+\Delta k'_1$ | $40+\Delta r_1$ | $37+\Delta r'_1$ | $22+\Delta s_1$ | $X_0+\Delta s'_1$ |
| 1 | $33+\Delta k_2$ | $30+\Delta k'_2$ | $72+\Delta r_2$ | $69+\Delta r'_2$ | $33+\Delta s_2$ | $X_1+\Delta s'_2$ |
| 2 | $44+\Delta k_3$ | $42+\Delta k'_3$ | $141+\Delta r_3$ | $140+\Delta r'_3$ | $\min(44, X_2+KB_1)+\Delta s_3$ | $X_2+\Delta s'_3$ |

(continued)

| $\mu$ | $Z_{CSI}$ [symbols] | | $Z_{CSI}$ [symbols] | | $Z_{CSI}$ [symbols] | |
|---|---|---|---|---|---|---|
| | $Z_1$ | $Z'_1$ | $Z_2$ | $Z'_2$ | $Z_3$ | $Z'_3$ |
| 3 | $97+\Delta k_4$ | $85+\Delta k'_4$ | $152+\Delta r_4$ | $140+\Delta r'_4$ | $\min(97,\ X_3+KB_2)+\Delta s_4$ | $X_3+\Delta s'_4$ |

$\Delta k_m$ ($m = 1,2,3,4$) and $\Delta k'_m$ may be positive or negative and may be the same as or different from each other, and $\Delta k_m$ and $\Delta k'_m$ may be pre-configured, configured by a network, or specified in a protocol. $\Delta r_m$ and $\Delta r'_m$ may be positive or negative and may be the same as or different from each other, and $\Delta r_m$ and $\Delta r'_m$ may be pre-configured, configured by a network, or specified in a protocol. $\Delta s_m$ and $\Delta s'_m$ may be positive or negative and may be the same as or different from each other, and $\Delta s_m$ and $\Delta s'_m$ may be pre-configured, configured by a network, or specified in a protocol.

$\Delta k_m$, $\Delta r_m$, and $\Delta s_m$ may be the same as or different from each other, and $\Delta k'_m$, $\Delta r'_m$, and $\Delta s'_m$ may be the same as or different from each other.

In addition, CSI computation delay requirement 1 or CSI computation delay requirement 2 may be understood as, for example, a CSI computation time requirement of a second CSI report, or a CSI computation time requirement of a CSI report defined without taking a TRS resource into consideration, or a CSI computation time requirement of a CSI report defined without taking one or more CSI transmission occasions into consideration. The second CSI report is a CSI report that does not contain the first measurement result and/or the second measurement result.

As above mentioned, in combination with Table 3 and Table 4, the CSI computation time requirement of the first CSI report can be determined according to CSI computation delay requirement 1 or CSI computation delay requirement 2.

⑤ $Z_{CSI}$ may be a third value and $Z'_{CSI}$ may be a fourth value
The third value and the fourth value may be pre-configured, configured by a network, or specified in a protocol.

It may be noted that, the third value may refer to a certain fixed value, which is pre-configured, configured by a network, or specified in a protocol. The fourth value may refer to a certain fixed value, which is pre-configured, configured by a network, or specified in a protocol. Certainly, the third value and the fourth value can also be described in other terms, which is not limited herein.

In addition, $Z(m)$, $Z'(m)$, $Z_1$, $Z'_1$, $Z_2$, $Z'_2$, $Z_3$, and $Z'_3$ mentioned in "14. CSI computation time requirement of first CSI report" can be regarded as defined without taking a TRS resource into consideration, while $Z_{CSI}$ and $Z'_{CSI}$ can be regarded as defined with taking a TRS resource into consideration.

15. Exemplary description of a method for CSI report transmission

In combination with the above contents, an example of a method for CSI report transmission in embodiments of the disclosure is introduced below. It may be noted that, the network device may be a chip, a chip module, or a communication module, etc., and the terminal device may be a chip, a chip module, or a communication module, etc. In other words, the method is applied to the network device or the terminal device, which is not limited herein.

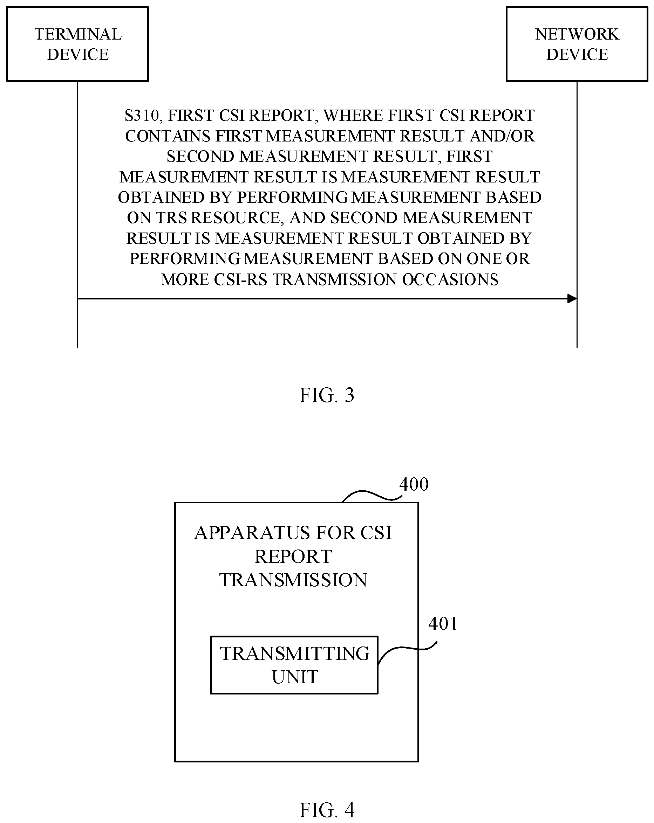

FIG. 3 is a flowchart of a method for CSI report transmission according to embodiments of the disclosure. Specifically, the method includes the following.

At S310, a terminal device transmits a first CSI report. The first CSI report contains a first measurement result and/or a second measurement result. The first measurement result is a measurement result obtained by performing measurement based on a TRS resource. The second measurement result is a measurement result obtained by performing measurement based on one or more CSI-RS transmission occasions.

Correspondingly, a network device receives the first CSI report.

It may be noted that, for details of "first CSI report", "TRS resource", "first measurement result", "second measurement result", etc., reference can be made to the above, which will not be repeated herein.

As can be seen, in order to enhance CSI reporting/feedback, in the disclosure, a CSI report needs to contain the measurement result (i.e., the first measurement result) obtained by performing measurement based on the TRS resource and/or the measurement result (i.e., the second measurement result) obtained by performing measurement based on the one or more CSI-RS transmission occasions. The CSI report containing the first measurement result and/or the second measurement result may be referred to as the first CSI report.

Currently, the measurement result obtained by performing measurement based on the TRS resource is intended for only the terminal device. In contrast, in the disclosure, the first measurement result is contained in the first CSI report for reporting/feedback, so that the measurement result based on the TRS resource can be reported/fed back to the network device, and thus CSI reporting/feedback can be enhanced, and the accuracy of evaluating the downlink channel quality can be improved, thereby improving the transmission performance and satisfying complex and diverse transmission requirements.

Since the second measurement result includes more/new CSI information, which is then contained in the first CSI report for reporting/feedback, CSI reporting/feedback can be enhanced. In addition, since the more/new CSI information is conducive to improving the accuracy of evaluating the downlink channel quality, the transmission performance can be improved, and complex and diverse transmission requirements can be satisfied.

Some possible implementations will be described below.

In some possible implementations, the first measurement result includes a time-domain channel property.

It may be noted that in combination with "3. First measurement result" above, since the first measurement result may indicate/represent/describe the time-domain change features/time-domain characteristics of the downlink channel, the first measurement result may include a time-domain channel property.

In some possible implementations, the time-domain channel property includes at least one of: Doppler shift, Doppler spread, delay spread, average delay, differential Doppler shift, differential Doppler spread, differential delay spread, differential average delay, Doppler shift change-rate, Doppler spread change-rate, delay spread change-rate, average delay change-rate, cross-correlation in time, relative Doppler shift, Doppler domain vector, Doppler domain codebook/codeword, time-domain vector, or time-domain codebook/codeword.

It may be noted that in combination with "3. First measurement result" above, the time-domain changes/time-domain characteristics of the downlink channel can be represented by information such as Doppler shift in the disclosure.

In some possible implementations, the second measurement result includes at least one of: compression information, prediction information, multiple groups of information. The compression information is compressed information of channel information or CSI parameters corresponding to the one or more CSI-RS transmission occasions. The prediction information is channel information or CSI parameters corresponding to the one or more CSI-RS transmission occasions or one or more time-domain locations after time-domain locations of the one or more CSI-RS transmission occasions. The multiple groups of information are multiple groups of channel information or multiple groups of CSI parameters corresponding to the one or more CSI-RS transmission occasions.

It may be noted that in combination with "7. Second measurement result" above, since the second measurement result may include more/new CSI information, and the more/new CSI information is conducive to improving the accuracy of evaluating the downlink channel quality, the transmission performance can be improved, and complex and diverse transmission requirements can be satisfied. The more/new CSI information may include at least one of compression information, prediction information, or multiple groups of information.

In some possible implementations, the one or more CSI-RS transmission occasions include multiple CSI-RS resources with different time-domain locations.

It may be noted that in combination with "5. One or more CSI-RS transmission occasions" above, the one or more CSI-RS transmission occasions may include multiple CSI-RS resources with different time-domain locations. It may be understood that, the multiple CSI-RS resources each have a different time-domain location. In other words, the multiple CSI-RS resources correspond to/occupy/are associated with different time-domain locations, or the CSI-RS resources are at different time-domain locations.

In some possible implementations, the first CSI report is associated with the one or more CSI-RS transmission occasions.

It may be noted that in combination with "8. First CSI report is associated with one or more CSI-RS transmission occasions" above, in the disclosure, it may be determined according to network configuration, network indication, pre-configuration, a specification in a protocol, etc., that the first CSI report is associated with the one or more CSI-RS transmission occasions. As such, by associating the first CSI report with the one or more CSI-RS transmission occasions, the terminal device can report via the first CSI report a measurement result obtained based on the one or more CSI-RS transmission occasions, which not only can enhance related configuration for CSI but also can enhance CSI reporting/feedback.

In some possible implementations, a time-domain location of the TRS resource is within a CSI measurement window. The one or more CSI-RS transmission occasions are within the CSI measurement window.

It may be noted that in combination with "9. CSI measurement window and CSI reporting window" above, the terminal device needs to perform measurement on TRS resources and/or CSI-RS resources within a duration corresponding to the CSI measurement window to obtain a first measurement result and/or perform measurement based on one or more CSI-RS transmission occasions to obtain a second measurement result.

In some possible implementations, the first measurement result and/or the second measurement result correspond to a CSI reporting window.

**EP 4 572 376 A1**

It may be noted that in combination with "9. CSI measurement window and CSI reporting window" above, the time corresponding to the first measurement result and/or the second measurement result reported/fed back by the terminal device is within the duration or time-domain location corresponding to the CSI reporting window. That is to say, the first measurement result and/or the second measurement result correspond to the CSI reporting window.

In some possible implementations, if CSI resource configuration contains first configuration information, the first CSI report contains the first measurement result, where the first configuration information is used to configure the TRS resource.

It may be noted that in combination with "10. How to determine that the first CSI report contains the first measurement result and/or the second measurement result" above, in the disclosure, whether the first CSI report contains the first measurement result can be determined according to whether the CSI resource configuration contains the first configuration information. As such, if *CSI-ResourceConfig* contains the first configuration information, it indicates that the network device configures the TRS resource for the terminal device. In this way, the terminal device can obtain the first measurement result by performing measurement based on the TRS resource and needs to report/feed back the first measurement result, so that the first CSI report needs to contain the first measurement result.

In some possible implementations, CSI report configuration contains first indication information, and the first indication information indicates the first CSI report to contain the first measurement result and/or the second measurement result.

It may be noted that in combination with "10. How to determine that the first CSI report contains the first measurement result and/or the second measurement result" above, in the disclosure, the first indication information can be introduced in *CSI-ReportConfig*, and the first indication information in *CSI-ReportConfig* indicates that the first CSI report needs to contain the first measurement result and/or the second measurement result.

In some possible implementations, CSI resource configuration contains second configuration information, and the second configuration information is used to configure the TRS resource to be periodic or aperiodic.

It may be noted that in combination with "2. TRS resource" above, in the disclosure, the second configuration information can be introduced in *CSI-ResourceConfig*, and the second configuration information can be used to configure a type of the TRS resource.

In some possible implementations, the first CSI report includes Part 1 and Part 2. All or part of information in the first measurement result or the second measurement result is in one of: Part 1, group 0 of Part 2, group 1 of Part 2, and group 2 of Part 2.

It may be noted that in combination with "11. Composition of first CSI report" above, the first CSI report may include Part 1 and Part 2, and Part 2 may include at least one of group 0, group 1, or group 2. In the disclosure, the first measurement result or the second measurement result can be carried in one of Part 1, group 0 of Part 2, group 1 of Part 2, and group 2 of Part 2, so that the first measurement result or the second measurement result can be reported.

In some possible implementations, a value of a first parameter associated with a priority of the first CSI report is a first value. The first value is pre-configured, configured by a network, or specified in a protocol. The first parameter is used to determine a priority value of the first CSI report.

It may be noted that in combination with "12. Priority of first CSI report" above, the first parameter may be referred to as the parameter *k'*, and the parameter *k'* can be used to determine the priority value $\mathrm{Pri}'_{CSI}(a, y', k', c', s')$ of the first CSI report. The value of the parameter k' can be determined in flexible manners, and a specific manner can be determined according to a specific communication scenario requirement. For example, the value of the parameter k' is the first value.

In some possible implementations, the number of CPUs occupied by the first CSI report is a second value, and the second value is pre-configured, configured by a network, or specified in a protocol.

It may be noted that in combination with "13. CPU occupied by first CSI report" above, the number $O'_{CPU}$ of CPUs occupied by the first CSI report can be determined in flexible manners, and a specific manner can be determined according to a specific communication scenario requirement. For example, $O'_{CPU}$ is the second value.

In some possible implementations, the number of CPUs occupied by the first CSI report is determined according to the number of channel measurement resources associated with the first CSI report, or is determined according to the number of channel measurement resources except the TRS resource associated with the first CSI report.

It may be noted that in combination with "13. CPU occupied by first CSI report" above, the number $O'_{CPU}$ of CPUs occupied by the first CSI report can be determined in flexible manners, and a specific manner can be determined according to a specific communication scenario requirement. For example, $O'_{CPU}$ is determined according to $K_s$ or $K'_s$.

In some possible implementations, the number of CPUs occupied by the first CSI report is determined according to a CSI measurement window and/or a CSI reporting window.

29

It may be noted that in combination with "13. CPU occupied by first CSI report" above, the number $O'_{CPU}$ of CPUs occupied by the first CSI report can be determined in flexible manners, and a specific manner can be determined according to a specific communication scenario requirement. For example, $O'_{CPU}$ is determined according to durations corresponding to the CSI measurement window and/or the CSI reporting window.

In some possible implementations, a CSI computation time requirement of the first CSI report is determined according to CSI computation delay requirement 1.

It may be noted that in combination with "14. CSI computation time requirement of first CSI report" above, the CSI computation time requirement $(Z_{CSI}, Z'_{CSI})$ of the first CSI report can be determined in flexible manners, and a specific manner can be determined according to a specific communication scenario requirement. For example, $(Z_{CSI}, Z'_{CSI})$ is determined according to CSI computation delay requirement 1.

In some possible implementations, a CSI computation time requirement of the first CSI report is determined according to CSI computation delay requirement 2.

It may be noted that in combination with "14. CSI computation time requirement of first CSI report" above, the CSI computation time requirement $(Z_{CSI}, Z'_{CSI})$ of the first CSI report can be determined in flexible manners, and a specific manner can be determined according to a specific communication scenario requirement. For example, $(Z_{CSI}, Z'_{CSI})$ is determined according to CSI computation delay requirement 2.

IV. Exemplary description of an apparatus for CSI report transmission

The solutions in embodiments of the disclosure are introduced mainly from the perspective of the method. It may be understood that, in order to realize the foregoing functions, the terminal device or the network device includes corresponding hardware structures and/or software modules for executing respective functions. Those of ordinary skill in the art will appreciate that units and algorithmic operations of various examples described in connection with embodiments herein may be implemented by hardware or by a combination of hardware and computer software. Whether these functions are performed by means of hardware or hardware driven by computer software depends on the application and the design constraints of the associated technical solution. Those skilled in the art may use different methods with regard to each particular application to implement the described functionality, but such methods may not be regarded as lying beyond the scope of the disclosure.

In embodiments of the disclosure, division of functional units of the terminal device or the network device may be implemented according to the foregoing method examples. For example, functional units may be divided to correspond to respective functions, or two or more functions may be integrated into one processing unit. The integrated unit may be implemented in a form of hardware, or may be implemented in a form of software program module. It may be noted that, the division of units in embodiments of the disclosure is illustrative and is only a division of logical functions, and other methods of division may also available in practice.

If an integrated unit is used, FIG. 4 is a block diagram illustrating functional units of an apparatus for CSI report transmission according to embodiments of the disclosure. The apparatus 400 for CSI report transmission includes a transmitting unit 401.

In some possible implementations, the transmitting unit 401 may be a module or unit configured to process signals, data, information, etc., which is not limited herein.

In some possible implementations, the apparatus 400 for CSI report transmission may further include a storage unit configured to store computer program codes or instructions executed by the apparatus 400 for CSI report transmission. The storage unit may be a memory.

In some possible implementations, the apparatus 400 for CSI report transmission may be a chip or a chip module.

In some possible implementations, the transmitting unit 401 may be integrated into other units.

For example, the transmitting unit 401 may be integrated in a communication unit. It may be noted that, the communication unit may be a communication interface, a transceiver, a transceiver circuit, or the like.

In some possible implementations, the transmitting unit 401 may be a processor or a controller, such as a baseband processor, a baseband chip, a central processing unit (CPU), a general-purpose processor, a digital signal processor (DSP), an application-specific integrated circuit (ASIC), a field programmable gate array (FPGA), or other programmable logic devices, transistor logic devices, hardware components, or any combination thereof. Various exemplary logic blocks, modules, and circuits disclosed in the disclosure may be implemented or executed. The processing unit may also be a combination for implementing computing functions, for example, one or more microprocessors, a combination of DSP and microprocessor, or the like.

In some possible implementations, the transmitting unit 401 is configured to perform any operation performed by the terminal device/chip/chip module, etc. in above method embodiments, such as transmitting or receiving data, etc., which will be described in detail below.

In specific implementation, the transmitting unit 401 is configured to perform any operation in above method embodiments, and when executing actions such as transmitting, other units can be selectively invoked to complete corresponding operations, which will be described in detail below.

The transmitting unit 401 is configured to transmit a first CSI report. The first CSI report contains a first measurement result and/or a second measurement result. The first measurement result is a measurement result obtained by performing measurement based on a TRS resource. The second measurement result is a measurement result obtained by performing measurement based on one or more CSI-RS transmission occasions.

As can be seen, in order to enhance CSI reporting/feedback, in the disclosure, a CSI report needs to contain the measurement result (i.e., the first measurement result) obtained by performing measurement based on the TRS resource and/or the measurement result (i.e., the second measurement result) obtained by performing measurement based on the one or more CSI-RS transmission occasions. The CSI report containing the first measurement result and/or the second measurement result may be referred to as the first CSI report.

Currently, the measurement result obtained by performing measurement based on the TRS resource is intended for only the terminal device. In contrast, in the disclosure, the first measurement result is contained in the first CSI report for reporting/feedback, so that the measurement result based on the TRS resource can be reported/fed back to the network device, and thus CSI reporting/feedback can be enhanced, and the accuracy of evaluating the downlink channel quality can be improved, thereby improving the transmission performance and satisfying complex and diverse transmission requirements.

Since the second measurement result includes more/new CSI information, which is then contained in the first CSI report for reporting/feedback, CSI reporting/feedback can be enhanced. In addition, since the more/new CSI information is conducive to improving the accuracy of evaluating the downlink channel quality, the transmission performance can be improved, and complex and diverse transmission requirements can be satisfied.

It may be noted that, for the implementation of various operations in the embodiments illustrated in FIG. 4, reference can be made to the elaborations in the method embodiments above, which will not be repeated herein.

Some possible implementations will be described below. For some specific descriptions, reference can be made to the elaborations above, which will not be repeated herein.

In some possible implementations, the first measurement result includes a time-domain channel property.

In some possible implementations, the time-domain channel property includes at least one of: Doppler shift, Doppler spread, delay spread, average delay, differential Doppler shift, differential Doppler spread, differential delay spread, differential average delay, Doppler shift change-rate, Doppler spread change-rate, delay spread change-rate, average delay change-rate, cross-correlation in time, relative Doppler shift, Doppler domain vector, Doppler domain codebook/codeword, time-domain vector, or time-domain codebook/codeword.

In some possible implementations, the second measurement result includes at least one of: compression information, prediction information, multiple groups of information. The compression information is compressed information of channel information or CSI parameters corresponding to the one or more CSI-RS transmission occasions. The prediction information is channel information or CSI parameters corresponding to the one or more CSI-RS transmission occasions or one or more time-domain locations after time-domain locations of the one or more CSI-RS transmission occasions. The multiple groups of information are multiple groups of channel information or multiple groups of CSI parameters corresponding to the one or more CSI-RS transmission occasions.

In some possible implementations, the one or more CSI-RS transmission occasions include multiple CSI-RS resources with different time-domain locations.

In some possible implementations, the first CSI report is associated with the one or more CSI-RS transmission occasions.

In some possible implementations, a time-domain location of the TRS resource is within a CSI measurement window. The one or more CSI-RS transmission occasions are within the CSI measurement window.

In some possible implementations, the first measurement result and/or the second measurement result correspond to a CSI reporting window.

In some possible implementations, if CSI resource configuration contains first configuration information, the first CSI report contains the first measurement result, where the first configuration information is used to configure the TRS resource.

In some possible implementations, CSI report configuration contains first indication information, and the first indication information indicates the first CSI report to contain the first measurement result and/or the second measurement result.

In some possible implementations, CSI resource configuration contains second configuration information, and the second configuration information is used to configure the TRS resource to be periodic or aperiodic.

In some possible implementations, the first CSI report includes Part 1 and Part 2. All or part of information in the first measurement result or the second measurement result is in one of: Part 1, group 0 of Part 2, group 1 of Part 2, and group 2 of Part 2.

In some possible implementations, a value of a first parameter associated with a priority of the first CSI report is a first value. The first value is pre-configured, configured by a network, or specified in a protocol. The first parameter is used to determine a priority value of the first CSI report.

In some possible implementations, the number of CPUs occupied by the first CSI report is a second value, and the second value is pre-configured, configured by a network, or specified in a protocol.

In some possible implementations, the number of CPUs occupied by the first CSI report is determined according to the number of channel measurement resources associated with the first CSI report, or is determined according to the number of channel measurement resources except the TRS resource associated with the first CSI report.

In some possible implementations, the number of CPUs occupied by the first CSI report is determined according to a CSI measurement window and/or a CSI reporting window.

In some possible implementations, a CSI computation time requirement of the first CSI report is determined according to CSI computation delay requirement 1.

In some possible implementations, a CSI computation time requirement of the first CSI report is determined according to CSI computation delay requirement 2.

V. Exemplary description of another apparatus for CSI report transmission

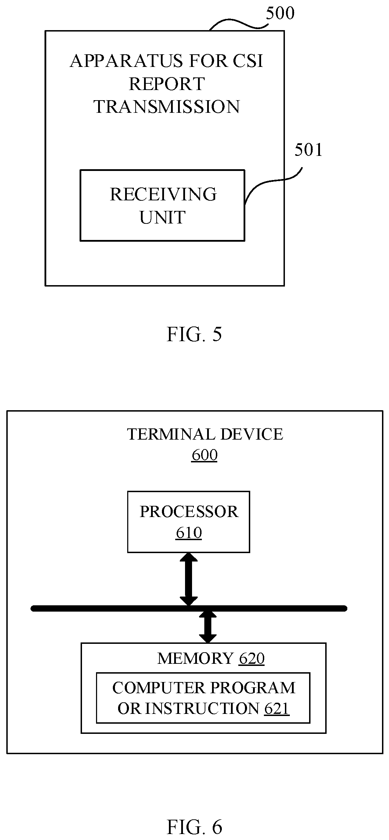

If an integrated unit is used, FIG. 5 is a block diagram illustrating functional units of an apparatus for CSI report transmission according to embodiments of the disclosure. The apparatus 500 for CSI report transmission includes a receiving unit 501.

In some possible implementations, the receiving unit 501 may be a module or unit configured to process signals, data, information, etc., which is not limited herein.

In some possible implementations, the apparatus 500 for CSI report transmission may further include a storage unit configured to store computer program codes or instructions executed by the apparatus 500 for CSI report transmission. The storage unit may be a memory.

In some possible implementations, the apparatus 500 for CSI report transmission may be a chip or a chip module.

In some possible implementations, the receiving unit 501 may be integrated into other units.

For example, the receiving unit 501 may be integrated in a communication unit. It may be noted that, the communication unit may be a communication interface, a transceiver, a transceiver circuit, or the like.

In some possible implementations, the receiving unit 501 may be a processor or a controller, such as a baseband processor, a baseband chip, a CPU, a general-purpose processor, a DSP, an ASIC, an FPGA, or other programmable logic devices, transistor logic devices, hardware components, or any combination thereof. Various exemplary logic blocks, modules, and circuits disclosed in the disclosure may be implemented or executed. The processing unit may also be a combination for implementing computing functions, for example, one or more microprocessors, a combination of DSP and microprocessor, or the like.

In some possible implementations, the receiving unit 501 is configured to perform any operation performed by the terminal device/chip/chip module, etc. in above method embodiments, such as transmitting or receiving data, etc., which will be described in detail below.

In specific implementation, the receiving unit 501 is configured to perform any operation in above method embodiments, and when executing actions such as transmitting, other units can be selectively invoked to complete corresponding operations, which will be described in detail below.

The receiving unit 501 is configured to receive a first CSI report. The first CSI report contains a first measurement result and/or a second measurement result. The first measurement result is a measurement result obtained by performing measurement based on a TRS resource. The second measurement result is a measurement result obtained by performing measurement based on one or more CSI-RS transmission occasions.

As can be seen, in order to enhance CSI reporting/feedback, in the disclosure, a CSI report needs to contain the measurement result (i.e., the first measurement result) obtained by performing measurement based on the TRS resource and/or the measurement result (i.e., the second measurement result) obtained by performing measurement based on the one or more CSI-RS transmission occasions. The CSI report containing the first measurement result and/or the second measurement result may be referred to as the first CSI report.

Currently, the measurement result obtained by performing measurement based on the TRS resource is intended for only the terminal device. In contrast, in the disclosure, the first measurement result is contained in the first CSI report for reporting/feedback, so that the measurement result based on the TRS resource can be reported/fed back to the network device, and thus CSI reporting/feedback can be enhanced, and the accuracy of evaluating the downlink channel quality can be improved, thereby improving the transmission performance and satisfying complex and diverse transmission requirements.

Since the second measurement result includes more/new CSI information, which is then contained in the first CSI report for reporting/feedback, CSI reporting/feedback can be enhanced. In addition, since the more/new CSI information is conducive to improving the accuracy of evaluating the downlink channel quality, the transmission performance can be improved, and complex and diverse transmission requirements can be satisfied.

It may be noted that, for the implementation of various operations in the embodiments illustrated in FIG. 5, reference can be made to the elaborations in the method embodiments above, which will not be repeated herein.

Some possible implementations will be described below. For some specific descriptions, reference can be made to the elaborations above, which will not be repeated herein.

In some possible implementations, the first measurement result includes a time-domain channel property.

In some possible implementations, the time-domain channel property includes at least one of: Doppler shift, Doppler spread, delay spread, average delay, differential Doppler shift, differential Doppler spread, differential delay spread, differential average delay, Doppler shift change-rate, Doppler spread change-rate, delay spread change-rate, average delay change-rate, cross-correlation in time, relative Doppler shift, Doppler domain vector, Doppler domain codebook/codeword, time-domain vector, or time-domain codebook/codeword.

In some possible implementations, the second measurement result includes at least one of: compression information, prediction information, multiple groups of information. The compression information is compressed information of channel information or CSI parameters corresponding to the one or more CSI-RS transmission occasions. The prediction information is channel information or CSI parameters corresponding to the one or more CSI-RS transmission occasions or one or more time-domain locations after time-domain locations of the one or more CSI-RS transmission occasions. The multiple groups of information are multiple groups of channel information or multiple groups of CSI parameters corresponding to the one or more CSI-RS transmission occasions.

In some possible implementations, the one or more CSI-RS transmission occasions include multiple CSI-RS resources with different time-domain locations.

In some possible implementations, the first CSI report is associated with the one or more CSI-RS transmission occasions.

In some possible implementations, a time-domain location of the TRS resource is within a CSI measurement window. The one or more CSI-RS transmission occasions are within the CSI measurement window.

In some possible implementations, the first measurement result and/or the second measurement result correspond to a CSI reporting window.

In some possible implementations, if CSI resource configuration contains first configuration information, the first CSI report contains the first measurement result, where the first configuration information is used to configure the TRS resource.

In some possible implementations, CSI report configuration contains first indication information, and the first indication information indicates the first CSI report to contain the first measurement result and/or the second measurement result.

In some possible implementations, CSI resource configuration contains second configuration information, and the second configuration information is used to configure the TRS resource to be periodic or aperiodic.

In some possible implementations, the first CSI report includes Part 1 and Part 2. All or part of information in the first measurement result or the second measurement result is in one of: Part 1, group 0 of Part 2, group 1 of Part 2, and group 2 of Part 2.

In some possible implementations, a value of a first parameter associated with a priority of the first CSI report is a first value. The first value is pre-configured, configured by a network, or specified in a protocol. The first parameter is used to determine a priority value of the first CSI report.

In some possible implementations, the number of CPUs occupied by the first CSI report is a second value, and the second value is pre-configured, configured by a network, or specified in a protocol.

In some possible implementations, the number of CPUs occupied by the first CSI report is determined according to the number of channel measurement resources associated with the first CSI report, or is determined according to the number of channel measurement resources except the TRS resource associated with the first CSI report.

In some possible implementations, the number of CPUs occupied by the first CSI report is determined according to a CSI measurement window and/or a CSI reporting window.

In some possible implementations, a CSI computation time requirement of the first CSI report is determined according to CSI computation delay requirement 1.

In some possible implementations, a CSI computation time requirement of the first CSI report is determined according to CSI computation delay requirement 2.

VI. Exemplary description of a terminal device

FIG. 6 is a schematic structural diagram of a terminal device according to embodiments of the disclosure. The terminal device 600 includes a processor 610, a memory 620, and a communication bus configured to connect the processor 610 and the memory 620.

In some possible implementations, the memory 620 includes but is not limited to a random access memory (RAM), a read-only memory (ROM), an erasable programmable read-only memory (EPROM), or a compact disc read-only memory (CD-ROM). The memory 620 is configured to store program codes executed by the terminal device 600 and data transmitted by the terminal device 600.

In some possible implementations, the terminal device 600 further includes a communication interface configured to receive and transmit data.

In some possible implementations, the processor 610 may be one or more CPUs. When the processor 610 is one CPU, the CPU may be a single-core CPU or a multi-core CPU.

In some possible implementations, the processor 610 may be a baseband chip, a chip, a CPU, a general-purpose processor, a DSP, an ASIC, an FPGA, or other programmable logic devices, transistor logic devices, hardware components, or any combination thereof.

In specific implementation, the processor 610 in the terminal device 600 is configured to execute a computer program or instruction 621 stored in the memory 620 to: transmit a first CSI report. The first CSI report contains a first measurement result and/or a second measurement result. The first measurement result is a measurement result obtained by performing measurement based on a TRS resource. The second measurement result is a measurement result obtained by performing measurement based on one or more CSI-RS transmission occasions.

As can be seen, in order to enhance CSI reporting/feedback, in the disclosure, a CSI report needs to contain the measurement result (i.e., the first measurement result) obtained by performing measurement based on the TRS resource and/or the measurement result (i.e., the second measurement result) obtained by performing measurement based on the one or more CSI-RS transmission occasions. The CSI report containing the first measurement result and/or the second measurement result may be referred to as the first CSI report.

Currently, the measurement result obtained by performing measurement based on the TRS resource is intended for only the terminal device. In contrast, in the disclosure, the first measurement result is contained in the first CSI report for reporting/feedback, so that the measurement result based on the TRS resource can be reported/fed back to the network device, and thus CSI reporting/feedback can be enhanced.

Since the second measurement result includes more/new CSI information, which is then contained in the first CSI report for reporting/feedback, CSI reporting/feedback can be enhanced. In addition, since the more/new CSI information is conducive to improving the accuracy of evaluating the downlink channel quality, the transmission performance can be improved, and complex and diverse transmission requirements can be satisfied.

It may be noted that, for the implementation of various operations, reference can be made to the corresponding elaborations of the method embodiments above. The terminal device 600 may be configured to perform the foregoing method embodiments of the disclosure, which will not be repeated herein.

VII. Exemplary description of a network device

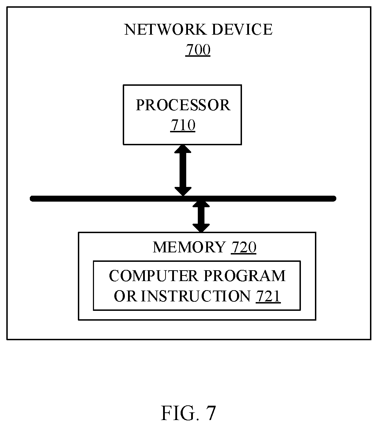

FIG. 7 is a schematic structural diagram of a network device according to embodiments of the disclosure. The network device 700 includes a processor 710, a memory 720, and a communication bus configured to connect the processor 710 and the memory 720.

In some possible implementations, the memory 720 includes but is not limited to an RAM, an ROM, an EPROM, or a CD-ROM. The memory 720 is configured to store related instructions and data.

In some possible implementations, the network device 700 further includes a communication interface configured to receive and transmit data.

In some possible implementations, the processor 710 may be one or more CPUs. When the processor 710 is one CPU, the CPU may be a single-core CPU or a multi-core CPU.

In some possible implementations, the processor 710 may be a baseband chip, a chip, a CPU, a general-purpose processor, a DSP, an ASIC, an FPGA, or other programmable logic devices, transistor logic devices, hardware components, or any combination thereof.

In specific implementation, the processor 710 in the network device 700 is configured to execute a computer program or instruction 721 stored in the memory 720 to: receive a first CSI report. The first CSI report contains a first measurement result and/or a second measurement result. The first measurement result is a measurement result obtained by performing measurement based on a TRS resource. The second measurement result is a measurement result obtained by performing measurement based on one or more CSI-RS transmission occasions.

As can be seen, in order to enhance CSI reporting/feedback, in the disclosure, a CSI report needs to contain the measurement result (i.e., the first measurement result) obtained by performing measurement based on the TRS resource and/or the measurement result (i.e., the second measurement result) obtained by performing measurement based on the one or more CSI-RS transmission occasions. The CSI report containing the first measurement result and/or the second measurement result may be referred to as the first CSI report.

Currently, the measurement result obtained by performing measurement based on the TRS resource is intended for only the terminal device. In contrast, in the disclosure, the first measurement result is contained in the first CSI report for reporting/feedback, so that the measurement result based on the TRS resource can be reported/fed back to the network device, and thus CSI reporting/feedback can be enhanced.

Since the second measurement result includes more/new CSI information, which is then contained in the first CSI report for reporting/feedback, CSI reporting/feedback can be enhanced. In addition, since the more/new CSI information is conducive to improving the accuracy of evaluating the downlink channel quality, the transmission performance can be improved, and complex and diverse transmission requirements can be satisfied.

It may be noted that, for the implementation of various operations, reference can be made to the corresponding elaborations of the method embodiments above. The network device 700 may be configured to perform the foregoing method embodiments of the disclosure, which will not be repeated herein.

VIII. Other related exemplary descriptions

In some possible implementations, the above method embodiments may be applied to or in a terminal device. That is, the execution entity of the above method embodiments may be a terminal device, a chip, a chip module, or a module, etc., which is not limited herein.

In some possible implementations, the above method embodiments may be applied to or in a network device. That is, the execution subject of the above method embodiments may be a network device, a chip, a chip module, or a module, etc., which is not limited herein.

A chip is further provided in embodiments of the disclosure. The chip includes a processor, a memory, and a computer program or instruction stored in the memory. The processor is configured to execute the computer program or instruction to perform the operations of the above method embodiments.

A chip module is further provided in embodiments of the disclosure. The chip module includes a transceiver assembly and a chip. The chip includes a processor, a memory, and a computer program or instruction stored in the memory. The processor is configured to execute the computer program or instruction to perform the operations of the above method embodiments.

A computer-readable storage medium is further provided in embodiments of the disclosure. The computer-readable storage medium is configured to store a computer program or instruction which, when executed, is operable to implement the operations of the above method embodiments.

A computer program product is further provided in embodiments of the disclosure. The computer program product includes a computer program or instruction which, when executed, is operable to implement the operations of the above method embodiments.

A communication system is further provided in embodiments of the disclosure. The communication system includes the terminal device and the network device above.

It may be noted that, for the sake of brevity, the foregoing embodiments are described as a series of action combinations. However, it will be appreciated by those skilled in the art that the disclosure is not limited to the sequence of actions described. According to embodiments of the disclosure, some steps may be performed in other orders or simultaneously. In addition, it will be appreciated by those skilled in the art that the embodiments described in the specification are preferable embodiments, and the actions, steps, modules, or units involved are not necessarily essential to the disclosure.

In the foregoing embodiments, the elaboration of each embodiment has its own emphasis. For the parts not described in detail in one embodiment, reference can be made to related elaborations in other embodiments.

The operations of the method or algorithm described in embodiments of the disclosure may be implemented by means of hardware, or may be implemented by executing software instructions by a processor. The software instructions can be implemented by corresponding software modules, which can be stored in an RAM, a flash memory, an ROM, an EPROM, an electrically EPROM (EEPROM), registers, hard disk, mobile hard disk, compact disc (CD)-ROM, or any other form of storage medium known in the art. An exemplary storage medium is coupled to the processor, such that the processor can read information from the storage medium and write information to the storage medium. The storage medium can also be a component of the processor. The processor and the storage medium may be located in an ASIC. In addition, the ASIC can be located in a terminal device or a management device. The processor and the storage medium may also be present as discrete components in the terminal device or the management device.

Those skilled in the art will appreciate that, all or part of functions described in embodiments of the disclosure can be implemented through software, hardware, firmware, or any other combination thereof. When implemented by software, all or part of the functions can be implemented in the form of a computer program product. The computer program product includes one or more computer instructions. When the computer instructions are applied and executed on a computer, all or part of the operations or functions of embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

Each module/unit in various devices or products described in the foregoing embodiments may be a software module/unit or a hardware module/unit, or some may be a software module/unit and some may be a hardware module/unit. For example, with regard to various devices or products applied to or integrated into a chip, various modules/units included therein may all be realized by means of hardware such as a circuit. Alternatively, at least some of the modules/units may be realized by means of a software program run on a processor integrated into the chip, and the rest (if any) modules/units may be implemented by means of hardware such as a circuit. The same also applies to various devices or products applied to or integrated into a chip module or various devices or products applied to or integrated into a terminal device.

The objectives, technical solutions, and advantages of embodiments of the disclosure are described in detail in the foregoing implementations. It may be appreciated that, the foregoing elaborations are merely some implementations of embodiments of the disclosure, but are not intended to limit the protection scope of embodiments of the disclosure. Any modifications, equivalent replacements, improvements, and the like made based on the technical solutions of embodiments of the disclosure shall all fall within the protection scope of embodiments of the disclosure.

## Claims

1. A method for channel state information (CSI) report transmission, comprising:
   transmitting a first CSI report, wherein the first CSI report contains a first measurement result and/or a second measurement result, the first measurement result is a measurement result obtained by performing measurement based on a tracking reference signal (TRS) resource, and the second measurement result is a measurement result obtained by performing measurement based on one or more channel state information reference signal (CSI-RS) transmission occasions.

2. The method of claim 1, wherein the first measurement result comprises a time-domain channel property.

3. The method of claim 2, wherein the time-domain channel property comprises at least one of:
   Doppler shift, Doppler spread, delay spread, average delay, differential Doppler shift, differential Doppler spread, differential delay spread, differential average delay, Doppler shift change-rate, Doppler spread change-rate, delay spread change-rate, average delay change-rate, cross-correlation in time, relative Doppler shift, Doppler domain vector, Doppler domain codebook/codeword, time-domain vector, or time-domain codebook/codeword.

4. The method of claim 1, wherein the second measurement result comprises at least one of:
   compression information, prediction information, or a plurality of groups of information;

   the compression information is compressed information of channel information or CSI parameters corresponding to the one or more CSI-RS transmission occasions;
   the prediction information is channel information or CSI parameters corresponding to the one or more CSI-RS transmission occasions or one or more time-domain locations after time-domain locations of the one or more CSI-RS transmission occasions; and
   the plurality of groups of information are a plurality of groups of channel information or a plurality of groups of CSI parameters corresponding to the one or more CSI-RS transmission occasions.

5. The method of claim 1, wherein the one or more CSI-RS transmission occasions comprise a plurality of CSI-RS resources with different time-domain locations.

6. The method of claim 1, wherein the first CSI report is associated with the one or more CSI-RS transmission occasions.

7. The method of claim 1, wherein

a time-domain location of the TRS resource is within a CSI measurement window; and
the one or more CSI-RS transmission occasions are within the CSI measurement window.

8. The method of claim 1, wherein the first measurement result and/or the second measurement result correspond to a CSI reporting window.

9. The method of claim 1, wherein in response to CSI resource configuration containing first configuration information, the first CSI report contains the first measurement result, the first configuration information being used to configure the TRS resource.

10. The method of claim 1, wherein CSI report configuration contains first indication information, and the first indication information indicates the first CSI report to contain the first measurement result and/or the second measurement result.

11. The method of claim 1, wherein CSI resource configuration contains second configuration information, and the second configuration information is used to configure the TRS resource to be periodic or aperiodic.

12. The method of claim 1, wherein the first CSI report comprises Part 1 and Part 2; and
all or part of information in the first measurement result and/or the second measurement result is in one of: Part 1, group 0 of Part 2, group 1 of Part 2, and group 2 of Part 2.

13. The method of claim 1, wherein a value of a first parameter associated with a priority of the first CSI report is a first value, the first value is pre-configured, configured by a network, or specified in a protocol, and the first parameter is used to determine a priority value of the first CSI report.

14. The method of claim 1, wherein a number of CSI processing units occupied by the first CSI report is a second value, and the second value is pre-configured, configured by a network, or specified in a protocol.

15. The method of claim 1, wherein a number of CSI processing units occupied by the first CSI report is determined according to a number of channel measurement resources associated with the first CSI report, or is determined according to a number of channel measurement resources except the TRS resource associated with the first CSI report.

16. The method of claim 1, wherein a number of CSI processing units occupied by the first CSI report is determined according to a CSI measurement window and/or a CSI reporting window.

17. The method of claim 1, wherein a CSI computation time requirement of the first CSI report is determined according to CSI computation delay requirement 1.

18. The method of claim 1, wherein a CSI computation time requirement of the first CSI report is determined according to CSI computation delay requirement 2.

19. A method for channel state information (CSI) report transmission, comprising:
receiving a first CSI report, wherein the first CSI report contains a first measurement result and/or a second measurement result, the first measurement result is a measurement result obtained by performing measurement based on a tracking reference signal (TRS) resource, and the second measurement result is a measurement result obtained by performing measurement based on one or more channel state information reference signal (CSI-RS) transmission occasions.

20. The method of claim 19, wherein the first measurement result comprises a time-domain channel property.

21. The method of claim 20, wherein the time-domain channel property comprises at least one of:
Doppler shift, Doppler spread, delay spread, average delay, differential Doppler shift, differential Doppler spread, differential delay spread, differential average delay, Doppler shift change-rate, Doppler spread change-rate, delay spread change-rate, average delay change-rate, cross-correlation in time, relative Doppler shift, Doppler domain vector, Doppler domain codebook/codeword, time-domain vector, or time-domain codebook/codeword.

22. The method of claim 19, wherein the second measurement result comprises at least one of: compression information, prediction information, or a plurality of groups of information;

> the compression information is compressed information of channel information or CSI parameters corresponding to the one or more CSI-RS transmission occasions;
> the prediction information is channel information or CSI parameters corresponding to the one or more CSI-RS transmission occasions or one or more time-domain locations after time-domain locations of the one or more CSI-RS transmission occasions; and
> the plurality of groups of information are a plurality of groups of channel information or a plurality of groups of CSI parameters corresponding to the one or more CSI-RS transmission occasions.

23. The method of claim 19, wherein the one or more CSI-RS transmission occasions comprise a plurality of CSI-RS resources with different time-domain locations.

24. The method of claim 19, wherein the first CSI report is associated with the one or more CSI-RS transmission occasions.

25. The method of claim 19, wherein

> a time-domain location of the TRS resource is within a CSI measurement window; and
> the one or more CSI-RS transmission occasions are within the CSI measurement window.

26. The method of claim 19, wherein the first measurement result and/or the second measurement result correspond to a CSI reporting window.

27. The method of claim 19, wherein CSI report configuration contains first indication information, and the first indication information indicates the first CSI report to contain the first measurement result and/or the second measurement result.

28. The method of claim 19, wherein in response to CSI resource configuration containing first configuration information, the first CSI report contains the first measurement result, the first configuration information being used to configure the TRS resource.

29. The method of claim 19, wherein CSI resource configuration contains second configuration information, and the second configuration information is used to configure the TRS resource to be periodic or aperiodic.

30. The method of claim 19, wherein the first CSI report comprises Part 1 and Part 2; and
all or part of information in the first measurement result and/or the second measurement result is in one of: Part 1, group 0 of Part 2, group 1 of Part 2, and group 2 of Part 2.

31. The method of claim 19, wherein a value of a first parameter associated with a priority of the first CSI report is a first value, the first value is pre-configured, configured by a network, or specified in a protocol, and the first parameter is used to determine a priority value of the first CSI report.

32. The method of claim 19, wherein a value of a parameter k associated with a priority of the first CSI report is determined according to a type of information contained in the first CSI report, and the parameter $k$ is used to determine a priority value of the first CSI report.

33. The method of claim 19, wherein a number of CSI processing units occupied by the first CSI report is a second value, and the second value is pre-configured, configured by a network, or specified in a protocol.

34. The method of claim 19, wherein a number of CSI processing units occupied by the first CSI report is determined according to a number of channel measurement resources associated with the first CSI report, or is determined according to a number of channel measurement resources except the TRS resource associated with the first CSI report.

35. The method of claim 19, wherein a number of CSI processing units occupied by the first CSI report is determined according to a CSI measurement window and/or a CSI reporting window.

36. The method of claim 19, wherein a CSI computation time requirement of the first CSI report is determined according to CSI computation delay requirement 1.

37. The method of claim 19, wherein a CSI computation time requirement of the first CSI report is determined according to CSI computation delay requirement 2.

38. An apparatus for channel state information (CSI) report transmission, comprising:
a transmitting unit configured to transmit a first CSI report, wherein the first CSI report contains a first measurement result and/or a second measurement result, the first measurement result is a measurement result obtained by performing measurement based on a tracking reference signal (TRS) resource, and the second measurement result is a measurement result obtained by performing measurement based on one or more channel state information reference signal (CSI-RS) transmission occasions.

39. An apparatus for channel state information (CSI) report transmission, comprising:
a receiving unit configured to receive a first CSI report, wherein the first CSI report contains a first measurement result and/or a second measurement result, the first measurement result is a measurement result obtained by performing measurement based on a tracking reference signal (TRS) resource, and the second measurement result is a measurement result obtained by performing measurement based on one or more channel state information reference signal (CSI-RS) transmission occasions.

40. A terminal device, comprising a processor, a memory, and a computer program or instruction stored in the memory, wherein the processor is configured to execute the computer program or instruction to implement the operations of the method of any one of claims 1 to 18.

41. A network device, comprising a processor, a memory, and a computer program or instruction stored in the memory, wherein the processor is configured to execute the computer program or instruction to implement the operations of the method of any one of claims 19 to 38.

42. A chip, comprising a processor and a communication interface, wherein the processor is configured to implement the operations of the method of any one of claims 1 to 18 and 19 to 37.

43. A computer-readable storage medium configured to store a computer program or instruction which, when executed, is operable to implement the operations of the method of any one of claims 1 to 18 and 19 to 37.

$\sim$ 110

$\sim$ 120

10

FIG. 1

A    B   C       D    TIME
DOMAIN

FIG. 2

| TERMINAL DEVICE | | NETWORK DEVICE |
| --- | --- | --- |

S310, FIRST CSI REPORT, WHERE FIRST CSI REPORT CONTAINS FIRST MEASUREMENT RESULT AND/OR SECOND MEASUREMENT RESULT, FIRST MEASUREMENT RESULT IS MEASUREMENT RESULT OBTAINED BY PERFORMING MEASUREMENT BASED ON TRS RESOURCE, AND SECOND MEASUREMENT RESULT IS MEASUREMENT RESULT OBTAINED BY PERFORMING MEASUREMENT BASED ON ONE OR MORE CSI-RS TRANSMISSION OCCASIONS

FIG. 3

400

APPARATUS FOR CSI REPORT TRANSMISSION

401

TRANSMITTING UNIT

FIG. 4

500

APPARATUS FOR CSI
REPORT
TRANSMISSION

501

RECEIVING
UNIT

FIG. 5

TERMINAL DEVICE
600

PROCESSOR
610

MEMORY 620

COMPUTER PROGRAM
OR INSTRUCTION 621

FIG. 6

NETWORK DEVICE
700

PROCESSOR
710

MEMORY 720

COMPUTER PROGRAM
OR INSTRUCTION 721

FIG. 7

## INTERNATIONAL SEARCH REPORT

| | International application No. |
|---|---|
| | **PCT/CN2023/112715** |

---

**A.    CLASSIFICATION OF SUBJECT MATTER**

H04W 24/08(2009.01)i

According to International Patent Classification (IPC) or to both national classification and IPC

**B.    FIELDS SEARCHED**

Minimum documentation searched (classification system followed by classification symbols)

IPC: H04W H04L H04B

Documentation searched other than minimum documentation to the extent that such documents are included in the fields searched

Electronic data base consulted during the international search (name of data base and, where practicable, search terms used)

CNTXT, ENTXTC, ENTXT, VEN, 3GPP: 信道状态信息, 报告, 上报, 测量, 结果, 跟踪参考信号, 信道状态信息参考信号, 传输时机, 时域, 多普勒, 压缩, 预测, 多组, CSI, report, measure, result, TRS, CSI-RS, transmit+, occasion, time, slot, domain, doppler, compress, predict

**C.    DOCUMENTS CONSIDERED TO BE RELEVANT**

| Category* | Citation of document, with indication, where appropriate, of the relevant passages | Relevant to claim No. |
|---|---|---|
| X | CN 112242887 A (CHINA MOBILE COMMUNICATION LTD., RESEARCH INSTITUTE et al.) 19 January 2021 (2021-01-19) <br> description, paragraphs 111-163 | 1-43 |
| X | CN 113840324 A (HUAWEI TECHNOLOGIES CO., LTD.) 24 December 2021 (2021-12-24) <br> description, paragraphs 136-251 | 1-43 |
| X | WO 2022082422 A1 (LENOVO (BEIJING) LTD.) 28 April 2022 (2022-04-28) <br> description, paragraphs 35-61 | 1-43 |
| X | CN 114760654 A (BEIJING UNISOC COMMUNICATION TECHNOLOGY CO., LTD.) 15 July 2022 (2022-07-15) <br> description, paragraphs 41-115 | 1-43 |
| A | CN 111510262 A (HUAWEI TECHNOLOGIES CO., LTD.) 07 August 2020 (2020-08-07) <br> entire document | 1-43 |
| A | VIVO. "Maintenance on CSI acquisition" <br> *3GPP TSG RAN WG1 #95, R1-1812284*, 16 November 2018 (2018-11-16), <br> entire document | 1-43 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 October 2023** | **24 October 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/112715**

| Patent document cited in search report | | | Publication date (day/month/year) | Patent family member(s) | | | Publication date (day/month/year) |
|---|---|---|---|---|---|---|---|
| CN | 112242887 | A | 19 January 2021 | WO | 2021008432 | A1 | 21 January 2021 |
| CN | 113840324 | A | 24 December 2021 | WO | 2021259180 | A1 | 30 December 2021 |
| WO | 2022082422 | A1 | 28 April 2022 | | None | | |
| CN | 114760654 | A | 15 July 2022 | WO | 2022148490 | A1 | 14 July 2022 |
| CN | 111510262 | A | 07 August 2020 | WO | 2020156378 | A1 | 06 August 2020 |
| | | | | US | 2021392582 | A1 | 16 December 2021 |
| | | | | EP | 3905796 | A1 | 03 November 2021 |
| | | | | IN | 202127033016 | A | 15 April 2022 |

Form PCT/ISA/210 (patent family annex) (July 2022)